# EUROPEAN PATENT SPECIFICATION

(11) **EP 4 239 439 B1**
(45) Date of publication and mention of the grant of the patent: **06.08.2025**
(21) Application number: 21900823.2
(22) Date of filing: 29.10.2021
(51) Int. Cl.: G06F 1/16, C09J 9/00, H04M 1/02

(54) **ELECTRONIC DEVICE COMPRISING DISCHARGE STRUCTURE FOR CONNECTING STATIC ELECTRICITY TO GROUND**
ELEKTRONISCHE VORRICHTUNG MIT ENTLADUNGSSTRUKTUR ZUM VERBINDEN STATISCHER ELEKTRIZITÄT MIT DER MASSE
DISPOSITIF ÉLECTRONIQUE COMPRENANT UNE STRUCTURE DE DÉCHARGE POUR CONNECTER L'ÉLECTRICITÉ STATIQUE AU SOL

(30) Priority: 03.12.2020 KR 20200167474
(43) Date of publication of application: 06.09.2023
(73) Proprietor: Samsung Electronics Co., Ltd., Suwon-si, Gyeonggi-do 16677 (KR)
(72) Inventor: SONG, Kwonho, Suwon-si, Gyeonggi-do 16677 (KR); AN, Jungchul, Suwon-si, Gyeonggi-do 16677 (KR); PARK, Jaehwan, Suwon-si, Gyeonggi-do 16677 (KR); SUNWOO, Seunghui, Suwon-si, Gyeonggi-do 16677 (KR); YOON, Shinhyuk, Suwon-si, Gyeonggi-do 16677 (KR)
(74) Representative: Nederlandsch Octrooibureau
(86) International application number: PCT/KR2021/015407
(87) International publication number: WO 2022/119135

(56) References cited:
- EP-A2- 1 635 313
- CN-A- 112 020 693
- KR-A- 20200 100 385
- KR-A- 20200 101 220
- KR-A- 20200 101 224
- KR-A- 20200 101 224
- KR-B1- 102 019 122
- US-A1- 2015 002 785
- US-A1- 2022 164 002

## Description

### [Technical Field]

Various embodiments relate to an electronic device including a discharge structure that conducts static electricity to a ground.

### [Background Art]

Electronic devices are being gradually slimmed, and are being improved to increase the rigidity, to enhance the design aspect, and to differentiate functional elements thereof. These electronic devices are being transformed into various shapes, departing from a uniform rectangular shape. For example, the electronic devices may have a transformable structure that is convenient to carry and enables use of a large-screen display. As part of this transformation structure, the electronic devices include a foldable electronic device including a flexible display and at least two housings, which operate in a manner of being folded or unfolded relative to each other, and various improvement measures are being provided according to the application of flexible displays.

KR20200101224A discloses an electronic device having a panel constituting at least part of the display part and folded along the folding line, a bending part disposed adjacent to the long edge of the panel, a film part connected to the bending part and including a display circuit, an FPCB connected to the film part and connecting a processor and the display driving circuit , and a protection member disposed on the bending part and covering at least part of the bending part, wherein the protection member is adhered to one side of the bending part where the bending part and a bracket contacts.

### [Disclosure of Invention]

### [Technical Problem]

A foldable electronic device may include a hinge device, and first and second housings movably connected to each other via the hinge device. This foldable electronic device may be operated in an in-folding and/or out-folding manner by rotating the first housing via the hinge device in a range of 0 to 360 degrees relative to the second housing. The foldable electronic device may include a flexible display disposed to cross the first housing and the second housing in an open state of 180 degrees.

The flexible display may include a bendable display panel. The display panel may include a bending portion, which extends to one side and is electrically connected (e.g., grounded) to a conductive plate disposed on the rear surface of the flexible display, and in which a control circuit is disposed. For example, when a flexible display is disposed in a foldable electronic device and the display panel is viewed from above, the bending portion may protrude outward beyond an edge of the display panel.

In the foldable electronic device, static electricity introduced from the outside may be introduced into the foldable electronic device through an edge of the flexible display. This static electricity may directly or indirectly affect the display panel without flowing into a conductive plate electrically connected to a main ground of the electronic device via the bending portion, causing a malfunction such as a blackening phenomenon of the display panel or a short phenomenon of some data lines.

According to various embodiments of the disclosure, an electronic device including a discharge structure configured to conduct static electricity to a ground may be provided.

According to various embodiments, it is possible to provide an electronic device including a static electricity discharge structure that is capable of reducing malfunctions of a display panel by conducting static electricity, which is introduced from an edge of a flexible display via the bending portion, to a main ground of the electronic device.

### [Solution to Problem]

An electronic device according to various embodiments of the disclosure may include a first housing, a second housing, a hinge device disposed between the first housing and the second housing such that the second housing is foldable from one end of the first housing, a flexible display disposed on the first housing and the second housing, and a protection frame disposed to cover at least a portion of an edge of the flexible display and including at least one conductive member attached to an inner surface thereof facing the flexible display. The flexible display may include a display panel including a front surface portion facing in a first direction where the flexible display is visually exposed to an outside in an unfolded state in which the first housing and the second housing are arranged side by side in a straight line, a first extension extending from one end of the front surface portion and bent in a second direction opposite to the first direction to face a lateral direction perpendicular to the first direction, and a second extension extending from the first extension and attached to a rear surface of the front surface portion to be parallel to the front surface portion, a glass layer disposed in the first direction with respect to the display panel, a polymer layer disposed in the first direction with respect to the glass layer, wherein the polymer layer includes a first portion disposed to overlap the glass layer, and a second portion disposed outside the first portion and disposed to overlap the protection frame and the first extension of the display panel, an adhesive disposed between the glass layer and the first portion of the polymer layer, and an adhesive member attached to a rear surface of the second portion of the polymer layer and having adhesive force only in the first direction opposite to the second direction.

### [Advantageous Effects of Invention]

In an electronic device according to exemplary embodiments of the disclosure, it is possible to prevent a display from malfunctioning by guiding static electricity introduced from an edge of a flexible display to a main ground of the electronic device.

In addition, various effects directly or indirectly identified through the disclosure may be provided.

### [Brief Description of Drawings]

In connection with the description of the drawings, the same or similar components may be denoted by the same or similar reference numerals.
FIG. 1 is a view illustrating an electronic device according to various embodiments of the disclosure in the unfolded state.
FIG. 2 is a view illustrating the electronic device of FIG. 1 according to various embodiments of the disclosure in the folded state.
FIG. 3 is an exploded perspective view illustrating the electronic device according to various embodiments of the disclosure.
FIG. 4A is an exploded perspective view of an electronic device including a flexible display according to various embodiments of the disclosure.
FIG. 4B is a view illustrating configurations of respective areas of the electronic device according to various embodiments of the disclosure.
FIG. 5 is a perspective view illustrating a stacked structure of a flexible display according to various embodiments of the disclosure.
FIG. 6 is a rear view illustrating a configuration of a flexible display according to various embodiments of the disclosure.
FIG. 7 is a partial cross-sectional view of an electronic device schematically illustrating an edge of a flexible display according to an embodiment.
FIG. 8 is a partial cross-sectional view of an electronic device illustrating in detail an edge of a flexible display according to an embodiment.
FIG. 9 is a partial cross-sectional view of an electronic device illustrating in detail an edge of a flexible display according to another embodiment.
FIG. 10 is a partial cross-sectional view of an electronic device illustrating in detail an edge of a flexible display according to another embodiment.
FIG. 11 is a partial cross-sectional view of an electronic device illustrating in detail an edge of a flexible display according to another embodiment.
FIG. 12 is a view illustrating a configuration of a bending protection member according to an embodiment.
FIG. 13 is a view illustrating a configuration of a pattern of a bending protection member according to an embodiment.
FIG. 14 is a view illustrating a configuration of a pattern of a bending protection member according to another embodiment.

### [Mode for the Invention]

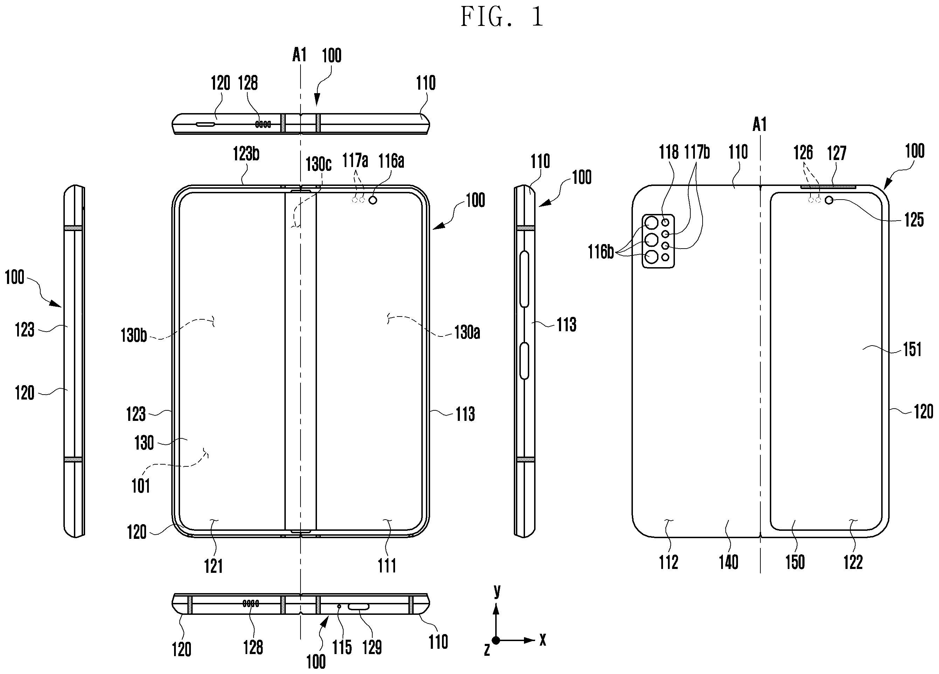

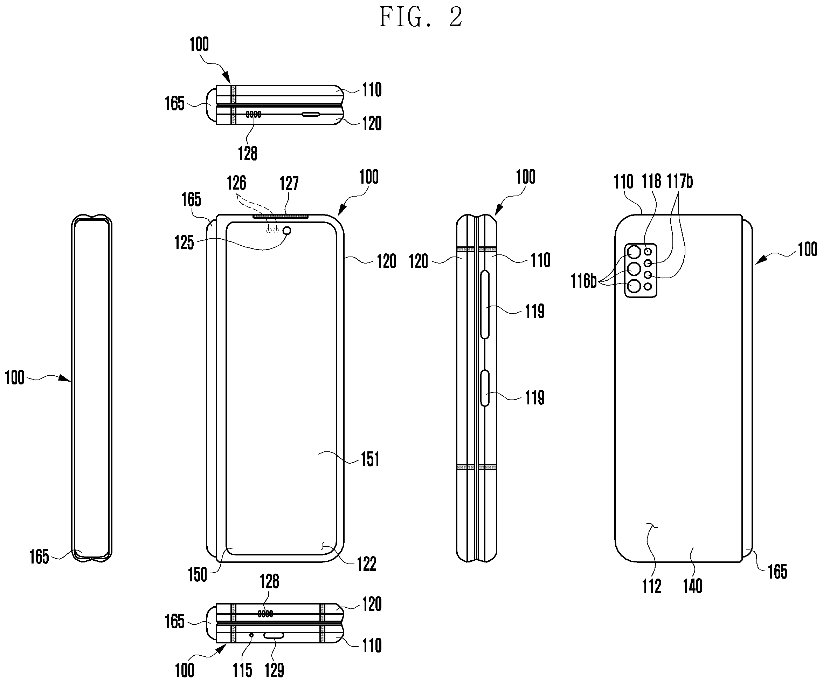

FIG. 1 is a diagram illustrating an unfolded state (unfolded stage) of an electronic device 100 according to various embodiments of the disclosure. FIG. 2 is a diagram illustrating a folded state of the electronic device 100 in FIG. 1 according to various embodiments of the disclosure.

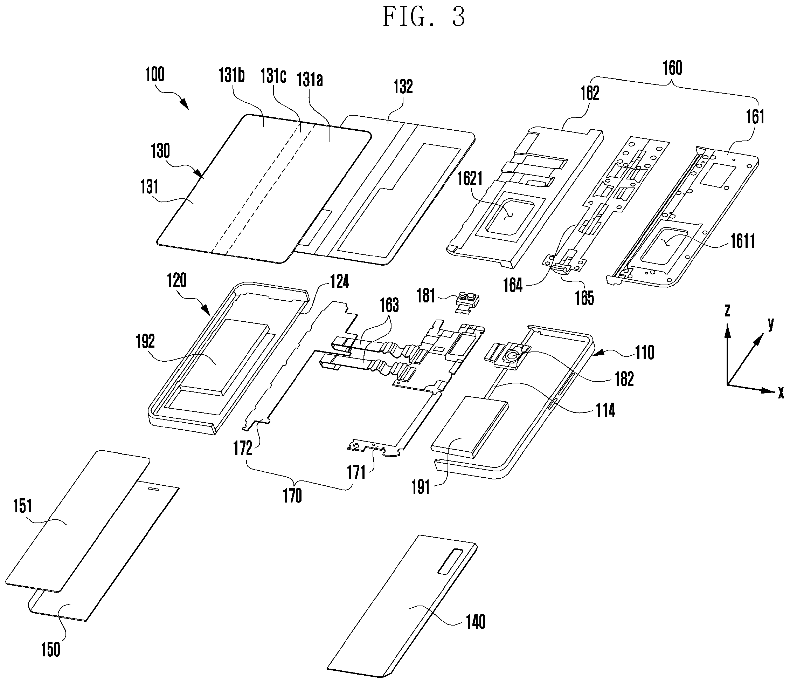

Referring to FIGS. 1 and 2, the electronic device 100 includes a pair of housings 110 and 120 (e.g., a foldable housing) rotatably coupled based on a folding axis A1 through a hinge device (e.g., the hinge device 164 in FIG. 3) to be folded against each other, a first display 130 (e.g., a flexible display, a foldable display, or a main display) disposed on a pair of housings 110 and 120, and a second display 151 (e.g., a sub-display). According to an embodiment, the hinge device (e.g., the hinge device 164 in FIG. 3) may be disposed so as not to be visible to the outside through the first housing 110 and the second housing 120 in a folded state, and so as not to be visible to the outside through the hinge cover 165 that protects the hinge device and covers the foldable area in an unfolded state. In the disclosure, the surface on which the first display 130 is disposed may be defined as a front surface of the electronic device 100, and the opposite surface of the front surface may be defined as a rear surface of the electronic device 100. In addition, the surface surrounding the space between the front surface and the rear surface may be defined as a side surface of the electronic device 100.

According to various embodiments, the pair of housings 110 and 120 includes a first housing 110 and a second housing 120 that are disposed to be foldable against each other through the hinge device (e.g., the hinge device 164 in FIG. 3). According to an embodiment, the pair of housings 110 and 120 is not limited to the form and coupling shown in FIGS. 1 and 2, and may be implemented by a combination and/or coupling of other shapes or components. According to an embodiment, the first housing 110 and the second housing 120 may be disposed on either sides of the folding axis A1, and may have an overall symmetrical shape with respect to the folding axis A1. According to some embodiments, the first housing 110 and the second housing 120 may be folded asymmetrically with respect to the folding axis A1. According to an embodiment, the angle or distance between the first housing 110 and the second housing 120 may vary depending on whether the electronic device 100 is in an unfolded state(eq. first state), a folded state(eq. second state), or an intermediate state.

According to various embodiments, the first housing 110 may include a first surface 111 that is connected to the hinge device (e.g., the hinge device 164 in FIG. 3) and is disposed to face in the same direction as the front surface of the electronic device 100 in the unfolded state of the electronic device 100, a second surface 112 directed in the opposite direction of the first surface 111, and a first side member 113 surrounding at least a portion of a first space between the first surface 111 and the second surface 112. According to an embodiment, the second housing 120 may include a third surface 121 that is connected to the hinge device (e.g., the hinge device 164 in FIG. 3) and is disposed to face in the same direction as the front surface of the electronic device 100 in the unfolded state of the electronic device 100, a fourth surface 122 directed in the opposite direction of the third surface 121, and a second side member 123 surrounding at least a portion of a second space between the third surface 121 and the fourth surface 122. According to an embodiment, the first surface 111 may be directed to face in the same direction as the third surface 121 in the unfolded state, and face the third surface 121 in the folded state. According to an embodiment, the electronic device 100 may include a recess 101 that is formed to accommodate the first display 130 through the structural coupling of the first housing 110 and the second housing 120. According to an embodiment, the recess 101 may have substantially the same size as the first display 130.

According to various embodiments, the hinge cover 165 is disposed between the first housing 110 and the second housing 120, thereby being disposed to be able to cover the hinge device (e.g., the hinge device 164 in FIG. 3). According to an embodiment, the hinge cover 165 may be covered by a portion of the first housing 110 and the second housing 120 or exposed to the outside thereof depending on the unfolded state, the folded state, or the intermediate state of the electronic device 100. For example, when the electronic device 100 is in the unfolded state, the hinge cover 165 may be covered by the first housing 110 and the second housing120 so as not to be exposed. According to an embodiment, when the electronic device 100 is in the folded state, the hinge cover 165 may be exposed to the outside between the first housing 110 and the second housing 120. According to an embodiment, in the case of the intermediate state in which the first housing 110 and the second housing 120 are folded with a certain angle, the hinge cover 165 may be at least partially exposed to the outside of the electronic device 100 between the first housing 110 and the second housing 120. For example, the area in which the hinge cover 165 is exposed to the outside may be smaller than that in the fully folded state. According to an embodiment, the hinge cover 165 may include a curved surface.

According to various embodiments, when the electronic device 100 is in the unfolded state (e.g., the state in FIG. 1), the first housing 110 and the second housing 120 may form an angle of 180 degrees, and a first area 130a, a folding area 130c, and a second area 130b of the first display 130 may form the same plane, and may be disposed to be directed in the same direction. In another embodiment, when the electronic device 100 is in the unfolded state, the first housing 110 may rotate at an angle of 360 degrees with respect to the second housing 120 to be reversely folded such that the second surface 112 and the fourth surface 122 face each other (an out-folding type).

According to various embodiments, when the electronic device 100 is in the folded state (e.g., the state in FIG. 2), the first surface 111 of the first housing 110 and the third surface 121 of the second housing 120 may be disposed to face each other. In this case, the first area 130a and the second area 130b of the first display 130 may form a narrow angle (e.g., in the range of 0 degrees to 10 degrees) through the folding area 130c, and may be disposed to face each other. According to an embodiment, at least a portion of the folding area 130c may be formed as a curved surface having a certain radius of curvature. According to an embodiment, when the electronic device 100 is in the intermediate state, the first housing 110 and the second housing 120 may be disposed at a certain angle. In this case, the first area 130a and the second area 130b of the first display 130 may form an angle greater than the folded state and less than the unfolded state, and the radius of curvature of the folding area 130c may be greater than that in the folded state. In some embodiments, the first housing 110 and the second housing 120 may form an angle to stop at a specified folding angle of between the folded state and the unfolded state through the hinge device (e.g., the hinge device 164 in FIG. 3) (a free stop function). In some embodiments, the first housing 110 and the second housing 120 may operate while being pressurized in the direction to be unfolded or in the direction to be folded based on a specified inflection angle through the hinge device (e.g., the hinge device 164 in FIG. 3).

According to various embodiments, the electronic device 100 may include at least one of at least one display 130 or 151 disposed in the first housing 110 and/or the second housing 120, an input device 115, sound output devices 127 and 128, sensor modules 117a, 117b, and 126, camera modules 116a, 116b, and 125, a key input device 119, an indicator (not shown), or a connector port 129. In some embodiments, the electronic device 100 may exclude at least one of the elements, or may further include at least one of other elements.

According to various embodiments, the at least one display 130 or 151 may include a first display 130 (e.g., a flexible display) disposed to be supported by the third surface 121 of the second housing 120 and by the first surface 111 of the first housing 110 through the hinge device (e.g., the hinge device 164 in FIG. 3), and a second display 151 disposed to be visible to the outside through the fourth surface 122 in the inner space of the second housing 120. According to an embodiment, the first display 130 may be mainly used in the unfolded state of the electronic device 100, and the second display 151 may be mainly used in the folded state of the electronic device 100. According to an embodiment, in the intermediate state, the electronic device 100 may use the first display 130 or the second display 151, based on a folding angle of the first housing 110 and the second housing 120.

According to various embodiments, the first display 130 may be disposed in a space formed by a pair of housings 110 and 120. For example, the first display 130 may be seated in a recess 101 formed by a pair of housings 110 and 120, and may be disposed to substantially occupy most of the front surface of the electronic device 100. According to an embodiment, the first display 130 may include a flexible display in which at least a portion thereof may be transformed into a flat or curved surface. According to an embodiment, the first display 130 may include a first area 130a facing the first housing 110, a second area 130b facing the second housing 120, and a folding area 130c that connects the first area 130a to second area 130b and faces the hinge device (e.g., the hinge device 164 in FIG. 3).

According to an embodiment, the first area 130a of the first display 130 may substantially form the first surface 111 of the first housing 110. According to an embodiment, the second area 130b of the first display 130 may substantially form the third surface 121 of the second housing 120.

According to an embodiment, the areas of the first display 130 are only exemplary physical divisions by a pair of housings 110 and 120 and the hinge device (e.g., the hinge device 164 in FIG. 3), and the first display 130 may be substantially displayed as a seamless full screen through a pair of housings 110 and 120 and the hinge device (e.g., the hinge device 164 in FIG. 3). According to an embodiment, the first area 130a and the second area 130b may have an overall symmetrical shape or a partially asymmetrical shape based on the folding area 130c.

According to various embodiments, the electronic device 100 may include a first rear cover 140 disposed on the second surface 112 of the first housing 110 and a second rear cover 150 disposed on the fourth surface 122 of the second housing 120. In some embodiments, at least a portion of the first rear cover 140 may be integrally formed with the first side member 113. In some embodiments, at least a portion of the second rear cover 150 may be integrally formed with the second side member 123. According to an embodiment, at least one of the first rear cover 140 and the second rear cover 150 may be formed through a substantially transparent plate (e.g., a glass plate including various coating layers, or a polymer plate) or an opaque plate. According to an embodiment, the first rear cover 140 may, for example, be formed by an opaque plate such as coated or tinted glass, ceramic, polymer, metal (e.g., aluminium, stainless steel (STS), or magnesium), or a combination of at least two of the above materials. According to an embodiment, the second rear cover 150, for example, may be formed through a substantially transparent plate, such as, glass or polymer. Accordingly, the second display 151 may be disposed to be visible to the outside through the second rear cover 150 in the inner space of the second housing 120.

According to various embodiments, the input device 115 may include a microphone 115. In some embodiments, the input device 115 may include a plurality of microphones 115 disposed to be able to detect the direction of sound. According to an embodiment, the sound output devices 127 and 128 may include speakers 127 and 128. According to an embodiment, the speakers 127 and 128 may include a call receiver 127 disposed through the fourth surface 122 of the second housing 120 and an external speaker 128 disposed through the side member of the second housing 120. In some embodiments, the microphone 115, the speakers 127 and 128, and the connector 129 may be disposed in the spaces of the first housing 110 and/or the second housing 120, and may be in contact with the external environment through at least one hole formed in the first housing 110 and/or the second housing 120. In some embodiments, the holes formed in the first housing 110 and/or the second housing 120 may be used in common for the microphone 115 and the speakers 127 and 128. In some embodiments, the sound output devices 127 and 128 may include a speaker (e.g., a piezo speaker) that operates without the holes formed in the first housing 110 and/or the second housing 120.

According to various embodiments, the camera modules 116a, 116b, and 125 may include a first camera device 116a disposed on the first surface 111 of the first housing 110, a second camera device 116b disposed on the second surface 112 of the first housing 110, and/or a third camera device 125 disposed on the fourth surface 122 of the second housing 120. According to an embodiment, the electronic device 100 may include a flash 118 disposed near the second camera device 116b. According to an embodiment, the flash 118 may include, for example, a light-emitting diode or a xenon lamp. According to an embodiment, the camera devices 116a, 116b, and 125 may include one or more lenses, an image sensor, and/or an image signal processor. In some embodiments, at least one of the camera devices 116a, 116b, and 125 may include two or more lenses (wide-angle and telephoto lenses) and image sensors, and may be disposed together on either side of the first housing 110 and/or the second housing 120.

According to various embodiments, the sensor modules 117a, 117b, and 126 may produce an electrical signal or a data value corresponding to the internal operation state of the electronic device 100 or the external environmental state. According to an embodiment, the sensor modules 117a, 117b, and 126 may include a first sensor module 117a disposed on the first surface 111 of the first housing 110, a second sensor module 117b disposed on the second surface 112 of the first housing 110, and a third sensor module 126 disposed on the fourth surface 122 of the second housing 120. In some embodiments, the sensor modules 117a, 117b, and 126 may include at least one of a gesture sensor, a grip sensor, a color sensor, an infrared (IR) sensor, an illumination sensor, an ultrasonic sensor, an iris recognition sensor, or a distance detection sensor (a TOF sensor or a RiDAR scanner).

According to various embodiments, the electronic device 100 may further include at least one of non-illustrated sensor modules, for example, an atmospheric pressure sensor, a magnetic sensor, a biometric sensor, a temperature sensor, a humidity sensor, and a fingerprint recognition sensor. In some embodiments, the fingerprint recognition sensor may be disposed through at least one of the first side member 113 of the first housing 110 and/or the second side member 123 of the second housing 120.

According to various embodiments, the key input device 119 may be disposed to be exposed to the outside through the first side member 113 of the first housing 110. In some embodiments, the key input device 119 may be disposed to be exposed to the outside through the second side member 123 of the second housing 120. In some embodiments, the electronic device 100 may exclude some or all of the key input devices 119 mentioned above, and the excluded key input device 119 may be implemented in another form such as a soft key in the at least one display 130 or 151 or the like. As another embodiment, the key input device 119 may be implemented using a pressure sensor included in the at least one display 130 or 151.

According to various embodiments, the connector port 129 may accommodate a connector (e.g., a USB connector or an IF module (interface connector port module)) for transmitting and receiving power and/or data to and from an external electronic device. In some embodiments, the connector port 129 may further perform a function of transmitting and receiving an audio signal to and from an external electronic device, or may further include a separate connector port (e.g., an ear jack hole) for performing a function of transmitting and the receiving an audio signal.

According to various embodiments, at least one camera device 116a or 125 among the camera devices 116a, 116b, and 125, at least one sensor module 117a or 126 among the sensor modules 117a, 117b, and 126, and/or the indicator may be disposed to be exposed through the at least one display 130 or 151. For example, at least one camera device 116a or 125, at least one sensor module 117a and 126, and/or the indicator may be disposed below an activation area (the display area) of the displays 130 and 140 in the inner space of the at least one housing 110 or 120, and may be disposed to be exposed to the external environment through an opening that is perforated to the cover member (e.g., a window layer (not shown) and/or the second rear cover 150 of the first display 130). In another embodiment, some camera devices or sensor modules 104 may be disposed to perform their own functions without being visually exposed through the display. For example, the area of the display 101 (e.g., the display panel) facing the camera device and/or the sensor module may not require the perforated opening.

FIG. 3 is an exploded perspective view of an electronic device 100 according to various embodiments of the disclosure.

Referring to FIG. 3, the electronic device 100 may include a first display 130, a second display 151, a support member assembly 160, at least one printed circuit board 170, a first housing 110, a second housing 120, a first rear cover 140, and a second rear cover 150.

According to various embodiments, the first display 130 may include a display panel 131 (e.g., a flexible display panel) and one or more plates 132 or layers on which the display panel 131 (e.g., the flexible display panel) is placed. According to an embodiment, one or more plates 132 may include a conductive plate (e.g., a Cu sheet or a SUS sheet) disposed between the display panel 131 and the support member assembly 160. According to an embodiment, one or more plates 132 may be formed to have substantially the same area as the first display 130, and the area facing the folding area 130c of the first display 130c may be formed to be bendable. According to an embodiment, one or more plates 132 may include at least one sub-material layer (e.g., a graphite member) disposed on the rear surface of the display panel 131. According to an embodiment, one or more plates 132 may be formed in a shape corresponding to the display panel 131.

According to various embodiments, the second display 151 may be disposed in the space between the second housing 120 and the second rear cover 150. According to an embodiment, the second display 151 may be disposed to be visible to the outside through substantially the entire area of the second rear cover 150 in the space between the second housing 120 and the second rear cover 150.

According to various embodiments, the support member assembly 160 may include a first support member 161 (e.g., a first support plate), a second support member 162 (e.g., a second support plate), a hinge device 164 disposed between the first support member 161 and the second support member 162, a hinge cover 165 that covers the hinge device 164 when viewed from the outside, and at least one wiring member 163 (e.g., a flexible printed circuit board (FPCB)) crossing the first support member 161 and the second support member 162. According to an embodiment, the support member assembly 160 may be disposed between one or more plates 132 and at least one printed circuit board 170. According to an embodiment, the first support member 161 may be disposed between the first area 131a of the first display 130 and the first printed circuit board 171. According to an embodiment, the second support member 162 may be disposed between the second area 131b of the first display 130 and the second printed circuit board 172. According to an embodiment, at least one wiring member 163 and at least a portion of the hinge device 164 may be disposed inside the support member assembly 160. At least one wiring member 163 may be disposed in the direction (e.g., the x-axis direction) crossing the first support member 161 and the second support member 162. According to an embodiment, at least one wiring member 163 may be disposed in the direction (e.g., the x-axis direction) perpendicular to the folding axis (e.g., the y-axis or the folding axis A in FIG. 1) of the folding area 130c.

According to various embodiments, at least one printed circuit board 170 may include a first printed circuit board 171 disposed to face the first support member 161 and a second printed circuit board 172 disposed to face the second support member 162. According to an embodiment, the first printed circuit board 171 and the second printed circuit board 172 may be disposed in the inner space formed by the support member assembly 160, the first housing 110, the second housing 120, the first rear cover 140, and/or the second rear cover 150. According to an embodiment, the first printed circuit board 171 and the second printed circuit board 172 may include a plurality of electronic components disposed to implement various functions of the electronic device 100.

According to various embodiments, the electronic device may include, in the first space of the first housing 110, a first printed circuit board 171 disposed in the space formed through the first support member 161, a first battery 191 disposed in the position facing a first swelling hole 1611 of the first support member 161, at least one camera device 182 (e.g., the first camera device 116a and/or the second camera device 116b in FIG. 1), or at least one sensor module 181 (e.g., the first sensor module 117a and/or the second sensor module 117b in FIG. 1). According to an embodiment, a second printing circuit board 172 disposed in a second space formed through the second support member 162 and a second battery 192 disposed in the position facing a second swelling hole 1621 of the second support member 162 may be included in a second space of the second housing 120. According to an embodiment, the first housing 110 and the first support member 161 may be integrally formed. According to an embodiment, the second housing 120 and the second support member 162 may also be integrally formed.

According to various embodiments, the first housing 110 may include a first rotation support surface 114, and the second housing 120 may include a second rotation support surface 124 corresponding to the first rotation support surface 114. According to an embodiment, the first rotation support surface 114 and the second rotation support surface 124 may include a curved surface corresponding to (naturally connected to) the curved surface included in the hinge cover 165. According to an embodiment, when the electronic device 100 is in the unfolded state, the first rotation support surface 114 and the second rotation support surface 124 may cover the hinge cover 165 such that the hinge cover 165 is not exposed or is minimally exposed through the rear surface of the electronic device 100. According to an embodiment, when the electronic device 100 is in the folded state, the first rotation support surface 114 and the second rotation support surface 124 may rotate along the curved surface included in the hinge cover 165, thereby maximally exposing the hinge cover 165 through the rear surface of the electronic device 100.

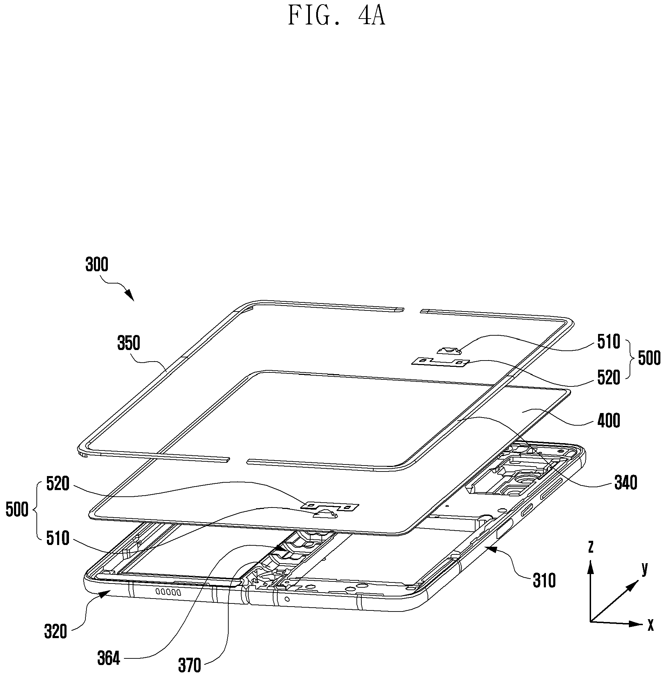

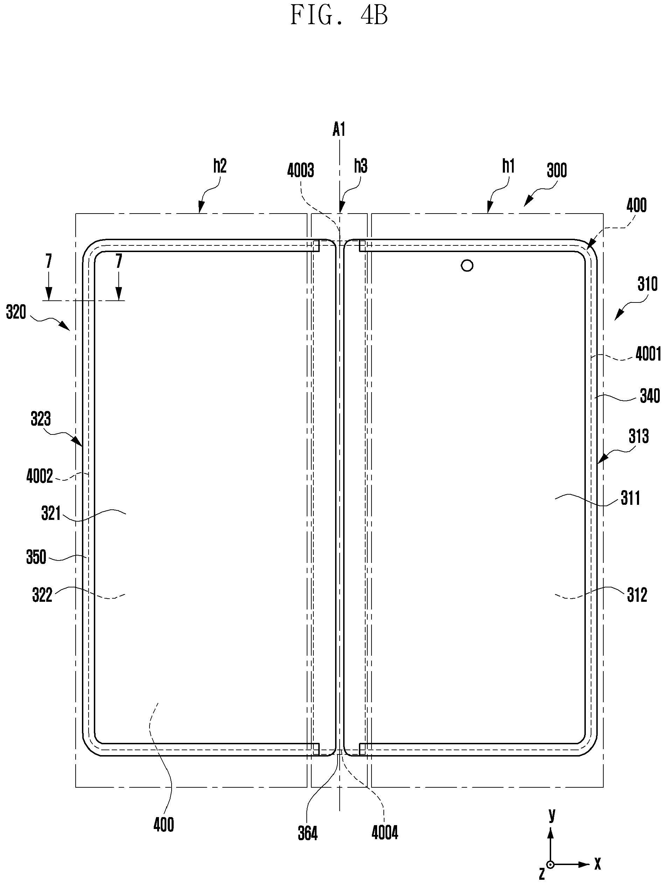

FIG. 4A is an exploded perspective view of an electronic device 300 including a flexible display 400 according to various embodiments of the disclosure. FIG. 4B is a view illustrating configurations of respective areas of the electronic device 300 according to various embodiments of the disclosure.

The electronic device 300 of FIGS. 4A and 4B may further include other embodiments that are at least partially similar to or different from the electronic device 100 of FIG. 1.

Referring to FIGS. 4A and 4B, the electronic device 300 (e.g., the electronic device 100 in FIG. 1) may include a first housing 310 (e.g., the first housing 110 in FIG. 1) (e.g., a first housing structure) including a first surface 311 (e.g., the first surface 111 in FIG. 1), a second surface 312 (e.g., the second surface 112 in FIG. 1) facing in a direction opposite to the first surface 311, and a first side surface member 313 (e.g., the first side surface member 113 in FIG. 1) surrounding a first space between the first surface 311 and the second surface 312. According to an embodiment, in the unfolded state, the electronic device 300 may include a second housing 320 (e.g., the second housing 120 in FIG. 1) (e.g., a second housing structure) including a third surface 321 (e.g., the third surface 121 in FIG. 1) facing in the same direction as the first surface 311, a fourth surface 322 (e.g., the fourth surface 122 in FIG. 1) facing in the same direction as the second surface 312, and a second side surface member 323 (e.g., the second side surface member 123 in FIG. 1) surrounding a second space between the third surface 312 and the fourth surface 322. According to an embodiment, the first housing 310 and the second housing 320 may be installed to be foldable relative to each other about a folding axis A1 via a hinge device 364 (e.g., the hinge device 164 in FIG. 3). For example, the electronic device 300 may be maintained in the folded or unfolded state when the first housing 310 and the second housing 320 are rotated relative to each other via the hinge device 364. According to an embodiment, in the folded state of the electronic device 300, the first surface 311 and the third surface 321 may face each other, and in the unfolded state, the first surface 311 and the third surface 321 may face the same direction. According to an embodiment, the electronic device 300 may include a flexible display 400 (e.g., the first display 130 in FIG. 1) disposed to at least partially cross the first surface 311 and the third surface 321. According to an embodiment, the flexible display 400 may be disposed to be supported by at least partial areas of the first housing 310, the hinge device 364, and the second housing 320.

According to various embodiments, the electronic device 300 (e.g., the electronic device 100 in FIG. 1) may include a first area h1 corresponding to the first housing 310, a second area h2 corresponding to the second housing structure 320, and a folding area h3 corresponding to the hinge device 364. According to an embodiment, in the electronic device 300, the first housing 310 corresponding to the first area h1 may operate to be folded or unfolded relative to the second housing 320 corresponding to the second area h2 via the hinge device 364 corresponding to the folding area h3.

According to various embodiments, the electronic device 300 includes one or more protection frames 340 and 350 (e.g., a decorative member or a decoration) disposed on the flexible display 400. According to an embodiment, the one or more protection frames 340 and 350 may include a first protection frame 340 disposed on the flexible display 400 in the first area h1 and a second protection frame 350 disposed on the flexible display 400 in the second area h2. According to an embodiment, the protection frames 340 and 350 may be made of a polymer material or a metal material, and may be disposed on respective housings 310 and 320 through at least one of bonding, taping, fusion, or structural coupling.

According to various embodiments, the flexible display 400 may include a first edge 4001 facing at least a portion of the first housing 310, a second edge 4002 facing at least a portion of the second housing 320, a third edge 4003 interconnecting one end of the first edge 4001 and one end of the second edge 4002, and a fourth edge 4004 interconnecting the other end of the first edge 4001 and the other end of the second edge 4002. According to an embodiment, the first edge 4001, the third edge 4003, and the fourth edge 4004 of the flexible display 400 may be at least partially disposed to be invisible from the outside by being disposed between the first housing 310 and the first protection frame 340. According to an embodiment, the second edge 4002, the third edge 4003, and the fourth edge 4004 of the flexible display 400 may be at least partially disposed to be invisible from the outside by being disposed between the second housing 320 and the second protection frame 350.

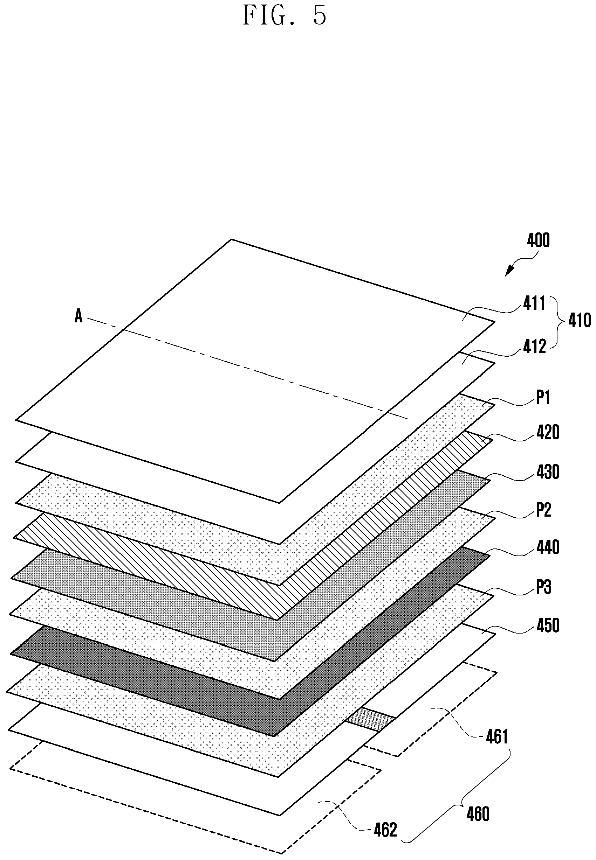

According to various embodiments, static electricity may be introduced into the interior of the electronic device 300 through a space between the flexible display 400 and the first protection frame 340 and/or a space between the flexible display 400 and the second protection frame 350. According to an embodiment, the introduced static electricity may be guided to at least one conductive structure electrically connected to a main ground of the electronic device 300 via a discharge structure according to exemplary embodiments of the disclosure, which conducts static electricity to a ground, whereby it is possible to suppress the display panel (e.g., the display panel 430 in FIG. 5) from malfunctioning and being damaged.

According to various embodiments, a pair of protection frames 340 and 550 may be omitted in the folding area h3 corresponding to the hinge device 364 for the folding and unfolding operations of the first housing 310 and the second housing 320 about the hinge device 364. According to an embodiment, the electronic device 300 may include, in the folding area h3, a protective structure 500 disposed to protect at least a portion of the third edge 4003 and at least a portion of the fourth edge 4004 of the flexible display 400 visually exposed to the outside. According to an embodiment, the edges of the flexible display 400 visually exposed through the folding area h3 may be disposed to be at least partially invisible from the outside by the protective structure 500. According to an embodiment, the protective structure 500 may include a support body 510 disposed to be supported by at least a portion of the hinge device 364, and a blocking member 520 disposed to be supported by the support body 510 and to at least partially cover the edges of the flexible display 400 from the outside. In some embodiments, the support body 510 may include wing structures rotatably installed on the left and right sides of the support body 510 to support a film-type blocking member 520.

FIG. 5 is a perspective view illustrating a stacked structure of the flexible display 400 according to various embodiments of the disclosure.

The flexible display 400 of FIG. 5 may further include embodiments that are at least partially similar to or different from the display 130 of FIG. 1.

Referring to FIG. 5, the flexible display 400 (e.g., the first display 130 of FIG. 1) may include a window layer 410, and a polarizer (POL) 420 (e.g., a polarization film), a display panel 430, a polymer member 440, and a conductive plate 450, which are sequentially disposed on the rear surface of the window layer 410. According to an embodiment, the window layer 410 includes a first protective layer 411 (e.g., a polymer layer (hereinafter, referred to as a "polymer layer")) and a second protective layer 412 laminated with the polymer layer 411 (i.e. a glass layer (hereinafter, referred to as a "glass layer")). According to an embodiment, the polymer layer may include PET or polyimide. According to an embodiment, the glass layer may include ultra-thin glass (UTG).

According to various embodiments, the window layer 410, the polarizer 420, the display panel 430, the polymer member 440, and the conductive plate 450 may be disposed to cross at least a portion of the first surface (e.g., the first surface 111 in FIG. 1) of the first housing (e.g., the first housing 110 in FIG. 1) and the third surface (e.g., the third surface 121 in FIG. 1) of the second housing (e.g., the second housing 120 in FIG. 1). According to an embodiment, the window layer 410, the polarizer 420, the display panel 430, the polymer member 440, and the conductive plate 450 are bonded to each other via adhesives P1, P2, and P3. For example, the adhesives P1, P2, and P3 may include at least one of an optical clear adhesive (OCA), a pressure-sensitive adhesive (PSA), a heat-responsive adhesive, a general adhesive, and a double-sided tape. According to an embodiment, the flexible display 400 may include another adhesive member (e.g., a double-sided tape or a waterproof member) disposed at least partially on one surface of the conductive plate 450. According to an embodiment, the flexible display 400 may be attached to a support member assembly (e.g., the support member assembly 160 in FIG. 3) of an electronic device (e.g., the electronic device 100 of FIG. 3) via another adhesive member.

According to various embodiments, a dark color (e.g., black) may be applied to the polymer member 440 to help display a background when the display is turned off. According to an embodiment, the polymer member 440 may include a cushion for reducing breakages of the flexible display 400 by absorbing an impact from the outside of the electronic device.

According to various embodiments, the conductive plate 450 may help reinforce the rigidity of the electronic device and may be used to block ambient noise and to dissipate heat emitted from surrounding heat emission components. According to an embodiment, the conductive plate 450 may include at least one of steel use stainless (SUS) (e.g., stainless steel (STS)), Cu, Al, or a CLAD (e.g., a layered member in which SUS and Al are alternately disposed). In another embodiment, the conductive plate 450 may include other alloy materials. According to an embodiment, the conductive plate 450 may be integrally configured by interconnecting a portion facing a first housing (e.g., the first housing 310 in FIG. 4A) of an electronic device (e.g., the electronic device 300 in FIG. 4A) and a portion facing a second housing (e.g., the second housing 320 in FIG. 4A) of the electronic device (e.g., the electronic device 300 in FIG. 4A) via a bendable portion (e.g., a portion provided with bendability by a lattice structure including a plurality of openings and/or slits) provided in a portion facing a hinge device (e.g., the hinge device 364 in FIG. 4A). In another embodiment, in the conductive plate 450, except for the portion facing the hinge device (the hinge device 364 in FIG. 4A), each of the portion facing the first housing (e.g., the first housing 310 in FIG. 4A) and the portion facing the second housing (e.g., the second housing 320 in FIG. 4A) may be separately manufactured. According to various embodiments, the flexible display 400 may further include metal reinforcing plates 460 disposed under the conductive plate for rigidity reinforcement. According to an embodiment, the reinforcing plates 460 may include a first reinforcing plate 461 facing the first housing (e.g., the first housing 310 in FIG. 4A) and a second reinforcing plate 462 facing the second housing (e.g., the second housing 320 in FIG. 4A).

According to various embodiments, the flexible display 400 may include one or more functional members disposed between the polymer member 440 and the conductive plate 450. According to an embodiment, the functional members may include a graphite sheet for heat dissipation, a force touch FPCB, a fingerprint sensor FPCB, an antenna radiator for communication, a heat dissipation sheet, a conductive/non-conductive tape, or an open cell sponge. According to an embodiment, when the functional members are bendable, the functional members may be disposed on the first housing (e.g., the first housing 310 in FIG. 4A) to at least a portion of the second housing (e.g., the second housing 320 in FIG. 4A) across the hinge device (e.g., the hinge device 364 in FIG. 4A). As another embodiment, the flexible display 400 may further include a detecting member configured to detect an input by an electromagnetic induction type writing member. According to an embodiment, the detection member may include a digitizer.

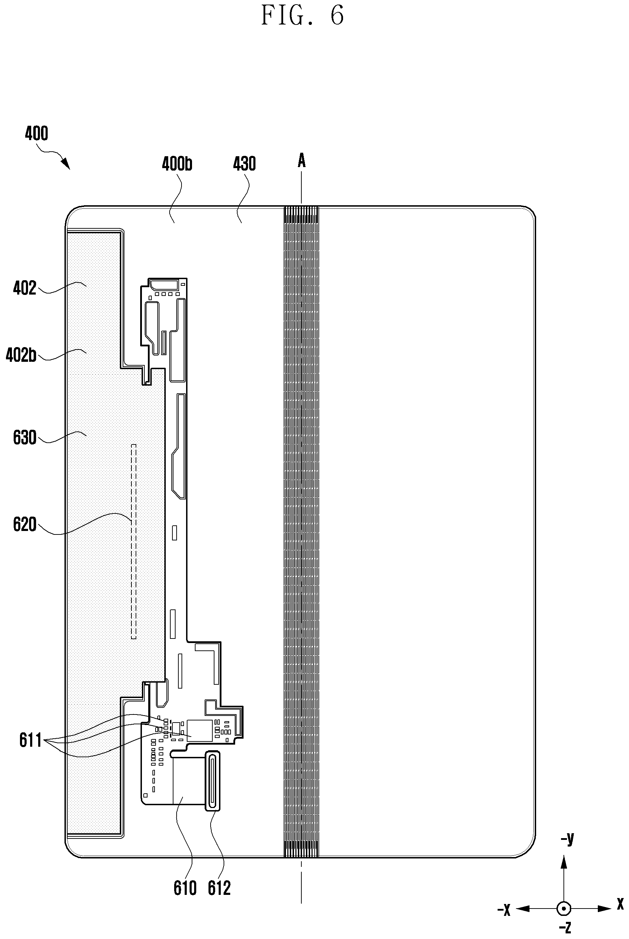

FIG. 6 is a rear view illustrating a configuration of the flexible display 400 according to various embodiments of the disclosure.

The flexible display 400 illustrated in FIG. 6 may include embodiments that are at least partially similar to or different from the flexible displays 400 illustrated in FIGS. 1 to 5. Hereinafter, only the features of the electronic device 400 that have not been described with reference to FIGS. 1 to 5 or are changed from those of FIGS. 1 to 5 will be described with reference to FIG. 6.

Referring to FIG. 6, a flexible display 400 (e.g., the first display 130 of FIG. 1) according to an embodiment may include a bendable display panel 430. The display panel 430 may include a bending portion 402 that is bent from one side of the flexible display 400 and extends to the rear surface 400b of the flexible display 400. According to an embodiment, the bending portion 402 may be electrically connected to the FPCB 610 on the rear surface 400b of the flexible display 400.

In the following description, the rear surface 400b of the flexible display 400 may be defined as a surface that is disposed to face in the same direction as the rear side of the electronic device 100 in the unfolded state of the electronic device 100. For example, the rear surface 400b of the flexible display 400 may be defined as a surface that is disposed to face in the same direction as the second surface (e.g., the second surface 112 in FIG. 1) or the fourth surface (e.g., the fourth surface 122 in FIG. 1) of the electronic device 100 inside the first housing or the second housing in the unfolded state of the electronic device 100. In some embodiments, the rear surface of the flexible display 400 may be defined as a surface that is disposed to face in the second direction (the -z direction) that the rear surface of the electronic device 100 faces in the unfolded state of the electronic device 100.

In the following description, the front surface of the flexible display 400 may be defined as a surface that is opposite to the rear surface of the flexible display 400 and is disposed to face in the same direction as the front side of the electronic device 100 in the unfolded state of the electronic device 100. For example, the front surface of the flexible display 400 may be defined as a surface that is disposed to face in the same direction as the first surface (e.g., the first surface 111 in FIG. 1) or the third surface (e.g., the third surface 121 in FIG. 1) of the electronic device 100 inside the first housing (e.g., the first housing 110 in FIG. 1) or the second housing (e.g., the second housing 120 in FIG. 1) in the unfolded state of the electronic device 100. In some embodiments, the front surface of the flexible display 400 may be defined as a surface that is disposed to face in the first direction (the z direction) in which the front surface of the electronic device 100 faces in the unfolded state of the electronic device 100.

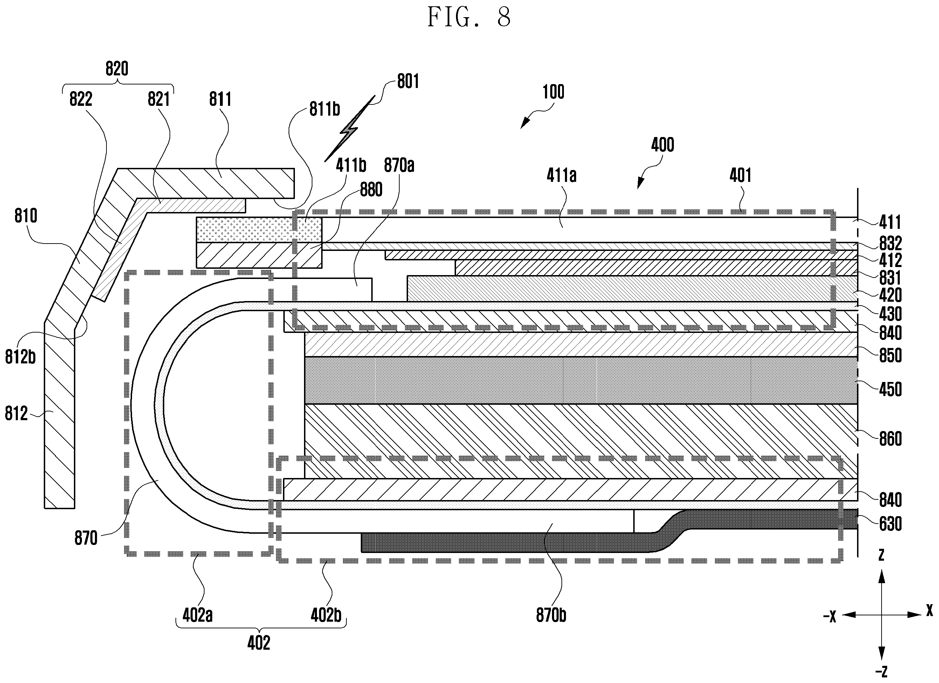

According to an embodiment, the bending portion 402 of the flexible display 400 includes a first extension (not illustrated) (e.g., the first extension 402a of FIG. 8) and a second extension 402b.

According to an embodiment, the first extension (not illustrated) of the display panel 430 may be disposed to substantially face a side surface of the electronic device 100 (e.g., the first side surface member 113 or the second side surface member 123 in FIG. 1) by being bent from an edge of the display panel 430 that is seen in the first direction (z direction) of the electronic device 100 toward the rear surface 400b of the flexible display 400. For example, although not illustrated, the first extension 402a of the display panel 430 may be disposed to face in a lateral direction of the electronic device 100 (e.g., the -x direction).

According to an embodiment, the second extension 402b of the display panel 430 may be a portion that extends from at least a portion of one end of the first extension and is attached to the rear surface of the flexible display 400. According to an embodiment, the second extension 402b may be attached to the rear surface 400b of the flexible display 400 via a spacer (not illustrated) (e.g., the spacer 860 in FIG. 8).

According to an embodiment, a control circuit 620 may be disposed on the second extension 402b. According to an embodiment, the control circuit 620 may be disposed on the second extension 402b in a chip-on-panel or chip-on-plastic (COP) method. According to an embodiment, the control circuit 620 may include a display driver IC (DDI) or a touch display driver IC (TDDI).

According to an embodiment, the second extension 402b may be electrically connected to the flexible printed circuit board (FPCB) 610 via a connection pad (not illustrated).

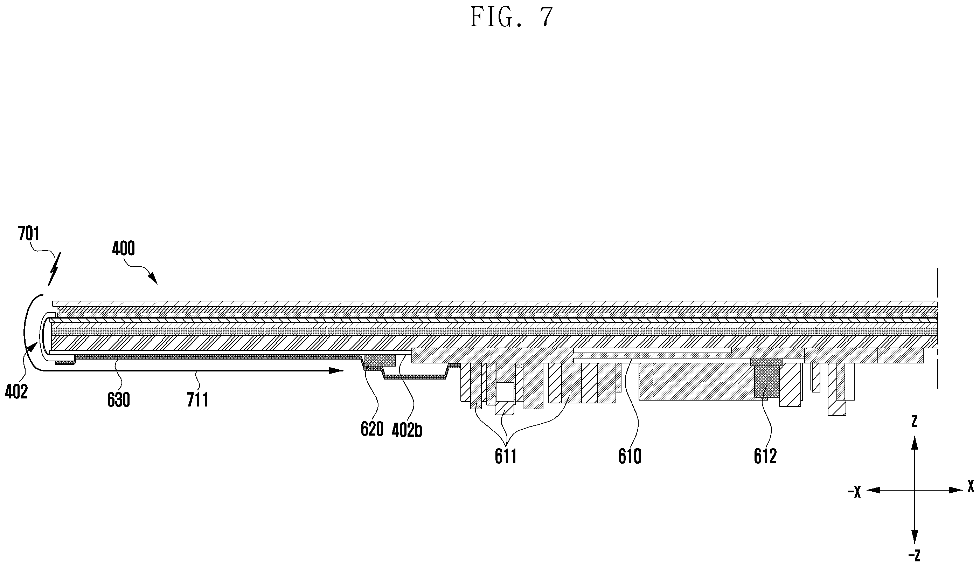

According to an embodiment, the FPCB 610 may be electrically connected to the second extension 402b of the flexible display 400 via a connection pad (not illustrated). According to an embodiment, the FPCB 610 may be electrically connected to a first printed circuit board (not illustrated) (e.g., the first printed circuit board 171) of the electronic device 100 (e.g., the electronic device 100 of FIG. 1) via a connector 612 (e.g., the connector 612 of FIG. 7).

According to an embodiment, the FPCB 610 may include a plurality of electrical elements 611. According to an embodiment, the plurality of electrical elements 611 may include a touch IC, a flash memory for display, a diode for preventing ESD, a pressure sensor, or a passive element such as a decap.

According to an embodiment, the flexible display 400 may further include a cover member 630 configured to cover at least a portion of the second extension 402b. According to an embodiment, the cover member 630 may cover an area substantially corresponding to the entire area of the second extension 402b. For example, the cover member 630 may cover the portion in which the control circuit 620 of the second extension 402b is disposed and a portion in which the connection pad electrically connected to the FPCB 610 of the second extension 402b is disposed. As another example, the cover member 630 may cover an area corresponding to a partial area of the second extension 402b. For example, the cover member 630 may not cover the portions in which the control circuit 620 of the second extension 402b and the connection pad electrically connected to the FPCB 610 of the second extension 402b are not disposed.

According to an embodiment, the cover member 630 may include a conductive layer. For example, the cover member 630 may include a conductive layer and a non-conductive layer, and at least a portion of the conductive layer may be disposed on an outer layer.

According to an embodiment, the cover member 630 may be electrically connected to a ground of the FPCB 610. According to an embodiment, by being electrically connected to the ground of the FPCB 610, the cover member 630 is capable of guiding static electricity (e.g., the static electricity 801 of FIG. 8) introduced into a space between the flexible display 400 and the protection frame 810 to the ground of the FPCB 610. According to an embodiment, the static electricity 801 introduced into the FPCB 610 may be grounded to a main ground of the electronic device 100 via the connector 612 of the FPCB 610 (e.g., the connector 612 of FIG. 7).

According to an embodiment, an electrical signal such as static electricity 801 (e.g., the static electricity 801 of FIG. 8) may be introduced into the electronic device 100 through the space between the flexible display 400 and the first protection frame 340 and/or between the flexible display 400 and the second protection frame 350. According to an embodiment, the static electricity 801 may be discharged to the main ground of the electronic device 100 through the bending portion 402 of the flexible display 400, the cover member 630, which covers at least a portion of the second extension 402b of the bending portion 402, and the FPCB 610. According to an embodiment, the main ground of the electronic device 100 is a ground provided on the first printed circuit board (e.g., the first printed circuit board 171 of FIG. 3) and may be defined as a common ground of the electronic device 100.

FIG. 7 is a partial cross-sectional view of an electronic device 100 schematically illustrating an edge of a flexible display 400 according to an embodiment. For example, FIG. 7 may be a cross-sectional view taken along line 7-7 of FIG. 4B, illustrating the flexible display 400 in detail.

The electronic device 100 illustrated in FIG. 7 may include embodiments that are at least partially similar to or different from the electronic devices 100 described with reference to FIGS. 1 to 6. Hereinafter, only the features of the electronic device 100 that have not been described with reference to FIGS. 1 to 6 or are changed from those of FIGS. 1 to 6 will be described with reference to FIG. 7.

Referring to FIGS. 6 and 7, the cover member 630 according to an embodiment may cover at least a portion of the bending portion 402 (e.g., the bending portion 402 of FIG. 6) and the control circuit 620 (e.g., the control circuit 620 of FIG. 6) disposed on the bending portion 402 in the rear direction (e.g., the -z direction) of the flexible display 400 (e.g., the first display 130 of FIG. 1).

According to an embodiment, the cover member 630 may extend to at least a portion of the FPCB 610 on the rear surface of the flexible display 400 to cover a portion of the FPCB 610 and at least a portion of the second extension 402b coupled to the FPCB 610.

According to an embodiment, a portion of the cover member 630 and the FPCB 610 may be in contact with each other to form a ground path via which static electricity 701 introduced from the outside is connected to the ground. For example, the static electricity 701 introduced from the edge portion of the flexible display 400 is may be transferred (or guided) to the FPCB 610 via the bending portion 402 and the cover member 630 as illustrated by arrow 711 in FIG. 7. According to an embodiment, the static electricity 701 transferred from the cover member 630 to the FPCB 610 may be grounded by being transferred to the first printed circuit board (e.g., the first printed circuit board 171 in FIG. 3) via the connector 612 of the FPCB 610. In some embodiments, the FPCB 610 and the conductive plate (not illustrated) of the flexible display 400 (e.g., the conductive plate 450 of FIG. 5) may be attached to each other by conductive tape (not illustrated), and the static electricity 701 transferred to the FPCB 610 may be grounded by being transferred to the conductive plate 450 through the conductive tape.

According to an embodiment, the FPCB 610 may include a plurality of electrical elements 611. According to an embodiment, the plurality of electrical elements 611 may include a touch IC, a flash memory for display, a diode for preventing ESD, a pressure sensor, or a passive element such as a decap.

An electronic device (e.g., the electronic device 100 in FIG. 1) according to various embodiments of the disclosure may include a first housing (e.g., the first housing 110 in FIG. 1), a second housing (e.g., the second housing 120 in FIG. 1), a hinge device (e.g., the hinge device 164 in FIG. 3) disposed between the first housing 110 and the second housing 120 such that the second housing 120 is foldable from one end of the first housing 110, a flexible display (e.g., the flexible display 400 of FIG. 8) disposed on the first housing 110 and the second housing 120, and a protection frame (e.g., the protection frame 810 in FIG. 8) disposed to cover at least a portion of an edge of the flexible display 400 and including at least one conductive member (e.g., the conductive member 820 in FIG. 8) attached to an inner surface thereof facing the flexible display 400. The flexible display 400 may include a display panel 430 including a front surface portion (e.g.; the front surface portion 401 in FIG. 8) disposed to face in a first direction when the flexible display 400 is visually exposed to the outside in an unfolded state in which the first housing 110 and the second housing 120 are arranged side by side in a straight line, a first extension (e.g., the first extension 402a in FIG. 8) extending from one end of the front surface portion 401 and bent in a second direction opposite to the first direction to face along a lateral direction perpendicular to the first direction, and a second extension (e.g., the second extension 402b in FIG. 8) extending from the first extension 402a and attached to the rear surface of the front surface portion 401 to be parallel to the front surface portion 401, a glass layer (e.g., the glass layer 412 in FIG. 8) disposed in the first direction with respect to the display panel 430, a polymer layer (e.g., the polymer layer 411 in FIG. 8) disposed in the first direction with respect o the glass layer 412, wherein the polymer layer 411 includes a first portion disposed to overlap the glass layer 412, and a second portion disposed outside the first portion and disposed to overlap the protection frame 810 and the first extension 402a, an adhesive (e.g., the second adhesive 832 of FIG. 8) disposed between the glass layer 412 and the first portion of the polymer layer 411, and an adhesive member (e.g., the adhesive member 880 of FIG. 8) attached in the second direction with respect to the second portion of the polymer layer 411 and having adhesive force only in the first direction opposite to the second direction.

According to an embodiment, the flexible display 400 may further include a bending protection member (e.g., the bending protection member 870 of FIG. 8) configured to cover the outer peripheral surface of the first extension 402a of the display panel 430, wherein one end of the bending protection member 870 extends to at least a portion of the front surface portion 401 to be adjacent to the glass layer 412, and the other end of the bending protection member 870 extends to at least a portion of the second extension 402b to overlap the glass layer 412, and a cover member (e.g., the cover member 630 of FIG. 8) disposed in the second direction with respect to the second extension 402b to cover a portion of the bending protection member 870 and the second extension 402b of the display panel 430, and electrically connected to a ground of an FPCB (e.g., the FPCB 610 in FIG. 6).

According to an embodiment, the FPCB 610 may be electrically connected to a main circuit board of the electronic device 100 via a connector of the FPCB 610, and the ground of the FPCB 610 may be grounded via the main circuit board.

According to an embodiment, the protection frame 810 may include a front surface frame 811 disposed to overlap at least a portion of the edge of the flexible display 400, and a side surface frame 812 extending from one end of the front surface frame 811 and disposed to face the lateral direction to face the first extension 402a of the display panel 430. The conductive member 820 may be attached to at least a portion of the front surface frame 811 and the side surface frame 812.

According to an embodiment, the conductive member 820 may include a first conductive member 820 attached in the second direction in respect to the front surface frame 811 to overlap the first extension 402a, and a second conductive member 822 attached to an inner wall of the side surface frame 812 facing the first extension 402a.

According to an embodiment, the adhesive member 880 may have a thickness greater than the thickness of the adhesive 832 disposed between the glass layer 412 and the first portion of the polymer layer 411.

According to an embodiment, the glass layer 412 may include ultra-thin glass (UTG).

According to an embodiment, the polymer layer 411 may include polyethylene terephthalate (PET).

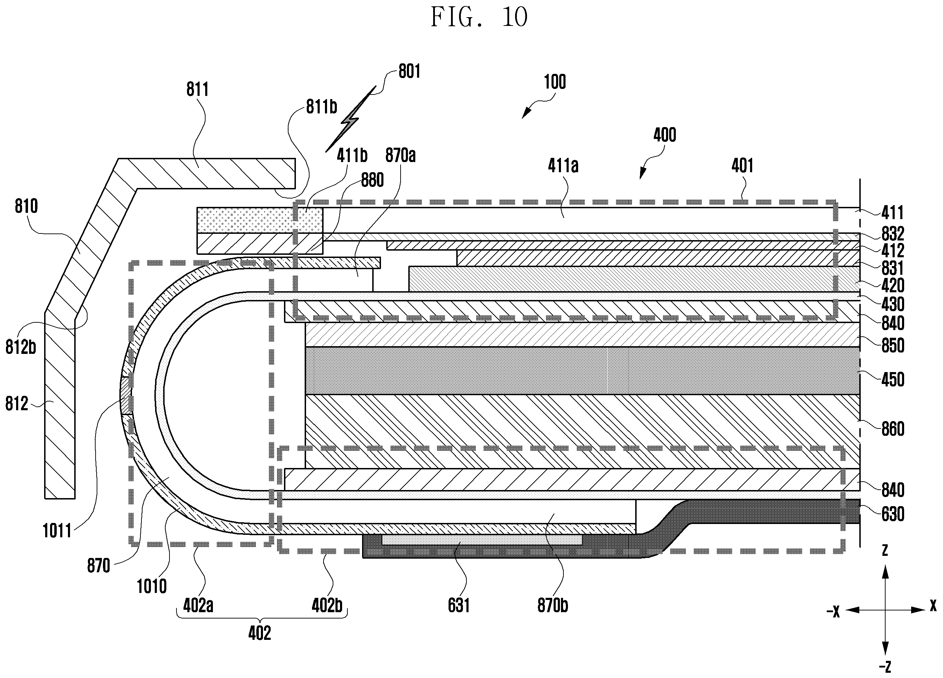

An electronic device 100 according to various embodiments of the disclosure includes a first housing 110, a second housing 120, a hinge device 164 disposed between the first housing 110 and the second housing 120 such that the second housing 120 is foldable from one end of the first housing 110, and a flexible display 400 disposed on the first housing 110 and the second housing 120. The flexible display 400 may include a display panel 430 including a front surface portion 401 disposed to face in a first direction when the flexible display 400 is visually exposed to the outside in an unfolded state in which the first housing 110 and the second housing 120 are arranged side by side in a straight line, a first extension 402a extending from one end of the front surface portion 401 and bent in a second direction opposite to the first direction to face a lateral direction perpendicular to the first direction, and a second extension 402b extending from the first extension 402a and attached to the rear surface of the front surface portion 401 to be parallel to the front surface portion 401, a glass layer 412 disposed in the first direction with respect to the display panel 430, a polymer layer 411 disposed in the first direction with respect to the glass layer 412, wherein the polymer layer 411 includes a first portion disposed to overlap the glass layer 412, and a second portion disposed outside the first portion and disposed to overlap the protection frame 810 and the first extension 402a, an adhesive 832 disposed between the glass layer 412 and the first portion of the polymer layer 411, and an adhesive member 880 attached in the second direction with respect to the second portion of the polymer layer 411 and having adhesive force only in the first direction opposite to the second direction. The flexible display 400 may further include a conductive member (e.g., the conductive member 1010 of FIG. 10) configured to cover the outer peripheral surface of the first extension 402a and extending to at least a portion of the second extension 402b.

According to an embodiment, the flexible display 400 may further include a bending protection member 870 configured to cover the outer peripheral surface of the first extension 402a of the display panel 430, wherein one end of the bending protection member 870 extends to at least a portion of the front surface portion 401 to be adjacent to the glass layer 412, and the other end of the bending protection member 870 extends to at least a portion of the second extension 402b to overlap the glass layer 412, a conductive member 1010 configured to cover the outer peripheral surface of the bending protection member 870, and a cover member 630 disposed in the second direction with respect to the second extension 402b to cover a portion of the bending protection member 1010 and the second extension 402b of the display panel 430, and electrically connected to a ground of an FPCB 610.

According to an embodiment, the conductive member 1010 may be electrically connected to the cover member 630 via a connection member of the cover member 630.

According to an embodiment, one end of the conductive member 1010 may extend from the front surface portion 401 to be adjacent to the glass layer 412.

According to an embodiment, the conductive member 1010 may include a bending pattern provided in at least a portion adjacent to the first extension 402a, and the bending pattern may be provided by partially removing at least some layers of the conductive member 1010 or at least some materials of the conductive member 1010.

According to an embodiment, the glass layer 412 may include ultra-thin glass (UTG).

According to an embodiment, the polymer layer 411 may include polyethylene terephthalate (PET).

An electronic device 100 according to various embodiments of the disclosure includes a first housing 110, a second housing 120, a hinge device 164 disposed between the first housing 110 and the second housing 120 such that the second housing 120 is foldable from one end of the first housing 110, and a flexible display 400 disposed on the first housing 110 and the second housing 120. The flexible display 400 may further include a display panel 430 including a front surface portion 401 disposed to face in a first direction where the flexible display 400 is visually exposed to the outside in an unfolded state in which the first housing 110 and the second housing 120 are arranged side by side in a straight line, a first extension 402a extending from one end of the front surface portion 401 and bent in a second direction opposite to the first direction to face a lateral direction perpendicular to the first direction, and a second extension 402b extending from the first extension 402a and attached to the rear surface of the front surface portion 401 to be parallel to the front surface portion 401, a glass layer 412 disposed in the first direction with respect to the display panel 430, and a polymer layer 411 disposed in the first direction with respect to the glass layer 412. The flexible display 400 may further include a conductive member 1010 configured to cover the outer peripheral surface of the first extension 402a, wherein one end of the conductive member 1010 extends to at least a portion of the front portion 401 to be disposed adjacent to the glass layer 412.

According to an embodiment, the flexible display 400 may further include a bending protection member 870 configured to cover the outer peripheral surface of the first extension 402a of the display panel 430, wherein one end of the bending protection member 870 extends to at least a portion of the front surface portion 401 to be adjacent to the glass layer 412, and the other end of the bending protection member 870 extends to at least a portion of the second extension 402b to overlap the glass layer 412, a conductive member 1010 configured to cover the outer peripheral surface of the bending protection member 870, and a cover member 630 disposed in the second direction with respect to the second extension 402b to cover a portion of the conductive member 1010 and the second extension 402b of the display panel 430, and electrically connected to a ground of an FPCB 610.

According to an embodiment, the conductive member 1010 may be electrically connected to the cover member 630 via a connection member of the cover member 630.

According to an embodiment, the conductive member 1010 may include a bending pattern provided in at least a portion adjacent to the first extension 402a, and the bending pattern may be provided by partially removing at least some layers of the conductive member 1010 or at least some materials of the conductive member 1010.

According to an embodiment, the glass layer 412 may include ultra-thin glass (UTG).

FIG. 8 is a partial cross-sectional view of an electronic device 100 illustrating in detail an edge of a flexible display 400 according to an embodiment. For example, FIG. 8 may be a cross-sectional view taken along line 7-7 of FIG. 4B, illustrating the flexible display 400 in detail.

The electronic device 100 illustrated in FIG. 8 may include embodiments that are at least partially similar to or different from the electronic devices 100 described with reference to FIGS. 1 to 7. Hereinafter, only the features of the electronic device 100 that have not been described with reference to FIGS. 1 to 7 or are changed from those of FIGS. 1 to 7 will be described with reference to FIG. 8.

Referring to FIG. 8, an electronic device 100 (e.g., the electronic device 100 of FIG. 1) according to an embodiment includes a flexible display 400 (e.g., the first display 130 in FIG. 1) defining the front surface of the electronic device 100. For example, the flexible display 400 may define a first surface (e.g., first surface 111 in FIG. 1) and a third surface (e.g., third surface 121 in FIG. 1) of the electronic device 100.

According to an embodiment, at least some edges of the flexible display 400 may be disposed to be invisible from the outside by a protection frame 810 (e.g., the first protection frame 340 or the second protection frame 350 of FIG. 4B) (e.g., a decorative member or decoration). For example, the protection frame 810 may be disposed to at least partially overlap the edges of the flexible display 400 such that the edges of the flexible display 400 are invisible from the front direction of the electronic device 100 (e.g., in the first direction (the z direction)).

According to an embodiment, the protection frame 810 may include a front surface frame 811 facing the front side of the electronic device 100 and a side surface frame 812 facing the lateral side of the electronic device 100. According to an embodiment, the front surface frame 811 may be disposed to overlap the edges of the flexible display 400 such that the edges of the flexible display 400 are invisible from the front side of the electronic device 100. According to an embodiment, the side surface frame 812 may be folded or bent from one end of the front surface frame 811 and may be disposed to face the lateral direction of the electronic device 100 (e.g., the -x direction). According to an embodiment, the side surface frame 812 may be disposed to cover the edge of the flexible display 400 in the lateral direction of the electronic device 100 such that the edge of the flexible display 400 is invisible in the lateral direction of the electronic device 100 (e.g., -x direction). According to an embodiment, the side surface frame 812 may be coupled with a side surface member (not illustrated) (e.g., the first side surface member 113 or the second side surface member 123 of FIG. 1) of the electronic device 100. In some embodiments, the side surface frame 812 of the protection frame 810 may be integrally configured with a side surface member (not illustrated) (e.g., the first side surface member 113 or the second side surface member 123 in FIG. 1) of the electronic device 100.

According to an embodiment, at least one conductive member 820 may be attached to the inner surfaces 811b and 812b of the protection frame 810. According to an embodiment, the conductive member 820 may be implemented in the form of a compressible sponge, a gasket, or a film. According to an embodiment, the at least one conductive member 820 may be attached to the rear surface 811b of the front surface frame 811 and disposed to face in the second direction (the -z direction) of the electronic device 100. According to an embodiment, the at least one conductive member 820 may be attached to the inner wall 812b of the side surface frame 812 and disposed to face the bending portion 402 (e.g., the first extension 402a) of the flexible display 400. In the illustrated example, only one conductive member 820 is illustrated, but a plurality of conductive members 820 may be provided. In this case, the plurality of conductive members 820 may include, for example, a first conductive member 821 attached to the rear surface of the front surface frame 811 and disposed to face in the second direction (the -z direction) of the electronic device 100, and a second conductive member 822 attached to the inner wall of the side surface frame 812 and disposed to face the bending portion 402 of the flexible display 400. According to an embodiment, the first conductive member 821 and the second conductive member 822 may be connected to each other and may be integrally configured. In another embodiment, the first conductive member 821 and the second conductive member 822 may be spaced apart from each other. According to various embodiments, the length of the conductive member 820 is not limited to the illustrated example and may be variously changed.

According to an embodiment, the at least one conductive member 820 attached to the inner surfaces 811b and 812b of the protection frame 810 may execute a function of transferring (or guiding) static electricity 801 introduced from the edges of the protection frame 810 and the flexible display 400 to the rear direction of the flexible display 400 (e.g., the -z direction). For example, the static electricity 801 may be transferred to the bending portion 402 of the flexible display 400 by the conductive member 820, and the static electricity 801 transferred to the bending portion 402 of the flexible display 400 may be connected to the ground of the FPCB 610 via the cover member 630.

According to an embodiment, the flexible display 400 may include a display panel 430, and one end of the display panel 430 may be bent from an edge of the electronic device 100 adjacent to the protection frame 810 to be attached to the rear surface of the flexible display 400. According to an embodiment, based on the shape of the display panel 430, the direction of the display panel 430 and/or the location of the display panel 430, the portions of the flexible display 400 may be separately defined as a front surface portion 401, a first extension 402a, and a second extension 402b. According to an embodiment, the first extension 402a and the second extension 402b of the flexible display 400 may be defined as a bending portion 402.

According to an embodiment, the front surface portion 401 of the flexible display 400 may be defined as an area where the display panel 430 is disposed to face in the first direction (the z direction) that is the front side of the electronic device 100. According to an embodiment, the front surface portion 401 of the flexible display 400 may be an area defining a first surface (e.g., the first surface 111 in FIG. 1) and a third surface (e.g., the third surface 121 in FIG. 1) of the electronic device 100.

According to an embodiment, the first extension 402a of the flexible display 400 may be defined as an area extending from the edge of the front surface portion 401 and bent in the second direction (the -z direction) that is the rear side of the electronic device 100. According to an embodiment, the first extension 402a of the flexible display 400 may be disposed to face a lateral direction (e.g., the -x direction) of the electronic device 100.

According to an embodiment, the second extension 402b of the flexible display 400 may be defined as an area extending from one end of the first extension 402a and attached to the rear surface of the front surface portion 401 via the spacer 860. According to an embodiment, the second extension 402b of the flexible display 400 may be disposed substantially in parallel to the front surface portion 401 by being attached to the rear surface of the front surface portion 401.

According to an embodiment, in the first direction (the z direction) with respect to the display panel 430 disposed on the front surface portion 401 of the flexible display 400, a polarizer 420, a second protective layer 412, a first protective layer 411 may be sequentially stacked.

According to various embodiments, the strength of the second protective layer 412 may be greater than that of the first protective layer 411. According to an embodiment, the first protective layer 411 is a polymer layer and may include polyethylene terephthalate (PET) or polyimide. According to an embodiment, the second protective layer 412 is a glass layer and may include ultra-thin glass (UTG). According to various embodiments, the material of each of the first protective layer 411 and the second protective layer 412 may be modified or changed in various ways. In the following description, the first protective layer 411 is described as a polymer layer 411, and the second protective layer 412 is described as a glass layer 412, but various embodiments of the disclosure may not be limited thereto.

According to an embodiment, a polarizer 420 may be disposed in the first direction (z direction) with respect to the display panel 430 disposed in the front surface portion 401, and the display panel 430 and the polarizer 420 may be attached to each other by means of an adhesive (not illustrated) (e.g., a PSA) disposed therebetween. According to an embodiment, a glass layer (e.g., UTG) 412 may be disposed in the first direction (the z direction) with respect to the polarizer 420, and the polarizer 420 and the glass layer 412 may be attached to each other by a first adhesive (e.g., a double-sided PSA) 831 disposed therebetween. According to an embodiment, a polymer layer 411 may be disposed in the first direction (the z direction) with respect to the polarizer 412, and the glass layer 412 and the polymer layer 411 may be attached to each other by a second adhesive (e.g., a double-sided PSA) 832 disposed therebetween.

According to some embodiments, the flexible display 400 may include a color filter (not illustrated) instead of the polarizer 420. For example, the color filter may execute a role that is the same as or similar to that of the polarizer 420. For example, an electronic device 100 that does not include a color filter may be defined as a color filter-on-encapsulation (COE) type electronic device 100. In the COE type electronic device 100, by using a color filter to replace the function or role of the polarizer 420, it is possible to improve transmittance and to reduce the thickness of the flexible display 400 by about 100 µm to about 150 µm.

According to an embodiment, the flexible display 400 may further include a touch panel (not illustrated). The touch panel may be provided between the polarizer 420 and the glass layer 412. In another embodiment, the touch panel may be provided between the display panel 430 and the polarizer 420. According to some embodiments, the touch panel may be implemented in an on-cell type provided on the surface of the display panel 430 or in an in-cell type provided inside the display panel 430. According to various embodiments, the shape and location of the touch panel may be variously modified or changed.

According to an embodiment, the flexible display 400 may include a protection member 840 (e.g., a patterned film) partially attached to the rear surface of the display panel 430. According to an embodiment, the protection member 840 may be a member configured to fix or protect the display panel 430 during a process of forming a plurality of elements (e.g., thin film transistors (TFTs)) and/or OLEDs of the display panel 430. According to an embodiment, the protection member 840 may be removed from the first extension 402a so that the display panel 430 has a bending characteristic in the first extension 402a. Accordingly, the protection member 840 may be attached, in the second direction (the -z direction), to the display panel 430 in the front surface portion 401 of the flexible display 400 and may be attached, in the first direction (the z direction), to the display panel 430 in the second extension 402b of the flexible display 400.

According to an embodiment, in the second direction (the -z direction) with respect to the protection member 840 disposed on the front surface portion 401 of the flexible display 400, a composite sheet 850 and a conductive plate 450 may be sequentially disposed. For example, the composite sheet 850 may include at least one polymer member (e.g., a light blocking layer or a buffer layer) and at least one functional member (e.g., a heat dissipation sheet).

According to an embodiment, a spacer 860 may be disposed between the conductive plate 450 and the protection member 840 disposed on the second extension 402b of the flexible display 400. According to an embodiment, the protection member 840 and the conductive plate 450 may be attached to each other by a spacer 860. For example, the second extension 402b of the flexible display 400 may be attached to the rear surface of the conductive plate 450 by the spacer 860. According to an embodiment, the spacer 860 may include a polymer material. According to some embodiments, the spacer 860 may be omitted.

According to an embodiment, a bending protection member (for example, a bending protection layer) 870 may be attached to the outer peripheral surface of the display panel 430 in the first extension 402a. According to an embodiment, the bending protection member 870 serves to suppress the damage (e.g., cracks) of the display panel 430 by covering the outer peripheral surface of the display panel 430 in the first extension 402a.

According to an embodiment, the bending protection member 870 may extend to the front surface portion 401 of the flexible display 400 and cover a portion of the display panel 430. For example, one end of the bending protection member 870 may extend to be adjacent to one end of the polarizer 420 and/or one end of the glass layer 412, thereby partially disposed, as seen in the first direction (the z direction) on the display panel 430 located in the front surface portion 401.

According to an embodiment, the bending protection member 870 may extend to the second extension 402b of the flexible display 400 to cover a portion of the display panel 430. For example, the other end of the bending protection member 870 may extend to a portion overlapping one end of the polarizer 420 and/or the glass layer 412, thereby being partially disposed, as seen in the second direction (the -z direction) on the display panel 430 located in the second extension 402b.

According to an embodiment, the cover member 630 may be disposed in the second direction (the -z direction) with respect to the display panel 430 located on the second extension 402b of the flexible display 400. According to an embodiment, the cover member 630 may be disposed to cover the other end of the bending protection member 870 located on the second extension 402b of the flexible display 400 as seen in the second direction (the -z direction).

According to an embodiment, the cover member 630 may provide a ground path that allows static electricity 801 introduced from the edges of the protection frame 810 and the flexible display 400 to be transferred to the FPCB 610 (e.g., FPCB 610 in FIG. 6) by coming into contact with the bending protection member 870. For example, the ground path may be connected to a main ground (e.g., a common ground) provided on the first printed circuit board (e.g., the first printed circuit board 171 of FIG. 3) via the cover member 630 and the FPCB 610 (e.g., the FPCB 610 in FIG. 6).

According to various embodiments, the glass layer 412 of the flexible display 400 may include ultra-thin glass (UTG). According to an embodiment, since the UTG has a property that is easy to crack, the glass layer 412 may not be disposed on an edge portion of the flexible display 400. For example, the glass layer 412 may not be disposed in an area overlapping the front surface frame 811 of the protection frame 810 in consideration of the fact that the UTG is easy to crack. For example, the area of the glass layer 412 may be smaller than that of the polymer layer 411.

According to an embodiment, since the area of the polymer layer 411 is larger than that of the glass layer 412, the edge of the polymer layer 411 may be disposed to overlap the front surface frame 811 of the protection frame 810. According to an embodiment, the edge of the polymer layer 411may be not attached to the front surface frame 811 while overlapping the front surface frame 811 of the protection frame 810. For example, an air gap may be formed between the front surface frame 811 and the edge of the polymer layer 411.

According to an embodiment, the polymer layer 411 may include polyethylene terephthalate (PET) and may serve to protect the glass layer 412 from external impact. For example, the polymer layer 411 may be defined as a protective layer.

According to an embodiment, the polymer layer 411 may be defined as including a first portion 411a and a second portion 411b disposed outside the first portion 411a. According to an embodiment, the first portion 411a of the polymer layer 411 may be defined as an area overlapping the glass layer 412 and not overlapping the front surface frame 811 of the protection frame 810. According to an embodiment, the second portion 411b of the polymer layer 411 may be defined as an area disposed outside the first portion 411a and overlapping the front surface frame 811 of the protection frame 810. According to an embodiment, since the second portion 411b of the polymer layer 411 is disposed closer to the protection frame 810 (or the side surface member of the electronic device 100) than one end of the bending protection member 870, it may be possible to suppress the static electricity 801 introduced into the space between the flexible display 400 and the protection frame 810 from being introduced into an inner direction where the center of the display area of the flexible display 400 is located (e.g., the direction where the hinge device (e.g., the hinge device 364 in FIG. 4A)) is disposed (the x direction). For example, the distance between the second portion 411b of the polymer layer 411 and the protection frame 810 (or the side surface member 113 or 123 of the electronic device 100) may be designed to be smaller than the distance between one end of the bending protection member 870 and the protection frame 810 (or the side surface member 113 or 123 of the electronic device 100).

In the illustrated example, for convenience of description, the first portion 411a and the second portion 411b of the polymer layer 411 are represented by different hatching, but the first portion 411a and the second portion 411b of the polymer layer 411 may be integrally configured without being physically (or materially) separated.

According to an embodiment, the first portion 411a of the polymer layer 411 and the glass layer 412 may be attached to each other by the second adhesive 832 (e.g., a double-sided PSA). According to an embodiment, the second adhesive 832 may include a double-sided PSA having adhesiveness in opposite directions, and may be disposed only in a portion overlapping the first portion 411a of the polymer layer 411 without being disposed in a portion overlapping the second portion 411b of the polymer layer 411.

According to an embodiment, the adhesive member 880 is attached in the second direction (the -z direction) with respect to the second portion 411b of the polymer layer 411. For example, the adhesive member 880 may include a single-sided PSA having adhesiveness in one direction and may be attached to the rear surface of the second portion 411b of the polymer layer 411.

According to an embodiment, since the adhesive member 880 does not have adhesiveness in the second direction (the -z direction), it is possible to prevent defective interference that causes the second portion 411b of the polymer layer 411 to be attached to a portion of the bending portion 402 of the flexible display 400 (e.g., the bending protection member 400) disposed to overlap the second portion 411b in the second direction (the -z direction) from the adhesive member 880.

According to an embodiment, the adhesive member 880 may include a conductive material. For example, the adhesive member 880 may include a conductive PSA or a conductive member having adhesiveness in one direction. According to an embodiment, since the adhesive member 880 is conductive, the static electricity 801 introduced into the space between the flexible display 400 and the protection frame 810 may be introduced toward the edge of the flexible display 400 where the protection frame 810 (e.g., to the -x direction) is disposed and into the bending portion 402 of the flexible display 400, rather than toward the inner side where the center of the display area of the flexible display 400 is located (e.g., to the direction where the hinge device (e.g., the hinge device 364 in FIG. 4A) is disposed (to the x direction)). In the electronic device 100 according to various embodiments, since the static electricity 801 introduced into the space between the flexible display 400 and the protection frame 810 is suppressed from being introduced into the inner direction where the center of the display area of the flexible display 400 (e.g., the direction where the hinge device (e.g., the hinge device 364 in FIG. 4A) is disposed (the x direction)), it is possible to suppress the malfunction (e.g., display failure) of the flexible display 400.

In another embodiment, the adhesive member 880 may not include a conductive material. In this case, the non-conductive adhesive member 880 may play a role of preventing defective interface which causes the second portion 411a of the polymer layer 411b to be attached to a portion of the bending portion 402 (e.g., the bending protection member 870) of the flexible display 400.

According to an embodiment, the adhesive member 880 may have a thickness greater than that of the second adhesive 832. For example, the second adhesive 832 disposed between the first portion 411a of the polymer layer 411 and the glass layer 412 may have a first thickness, and the adhesive member 880 may have a second thickness greater than the first thickness. According to an embodiment, as the thickness of the adhesive member 880 is designed to be greater than the thickness of the second adhesive 832, it is possible to reduce a gap between the protection frame 810 and the edge of the flexible display 400 (e.g., the gap in the z-direction). Accordingly, the static electricity 801 introduced into the periphery of the protection frame 810 may be guided (or transferred) toward the edge of the flexible display 400 (e.g., in the -x direction) and into the bending portion 402 of the flexible display 400, rather than toward the inner side where the center of the display area of the flexible display 400 is located (e.g., to the direction where the hinge device (e.g., the hinge device 364 in FIG. 4A) is disposed (to the x direction)).

In the illustrated example, the area (e.g., the width) of the second portion 411b of the polymer layer 411 and the area (e.g., the width) of the adhesive member 880 are illustrated to be the same, but the area (e.g., the width) of the adhesive member 880 may be greater than or equal to the area (e.g., the width) of the second portion 411b of the polymer layer 411. In some embodiments, as the area (e.g., the width) of the adhesive member 880 is designed to be greater than the area (e.g., the width) of the second portion 411b of the polymer layer 411, it is possible to further improve the effect of reducing static electricity 801.

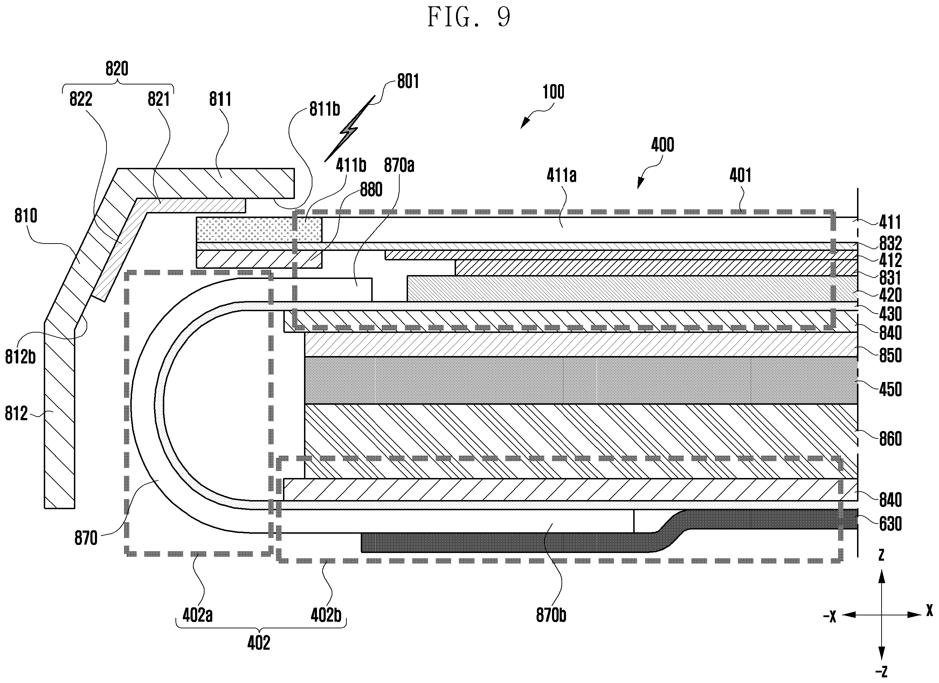

FIG. 9 is a partial cross-sectional view of an electronic device 100 illustrating in detail an edge of a flexible display 400 according to another embodiment. For example, FIG. 9 may be a cross-sectional view taken along line 7-7 of FIG. 4B, illustrating the flexible display 400 in detail.

The electronic device 100 illustrated in FIG. 9 may include embodiments that are at least partially similar to or different from the electronic devices 100 described with reference to FIGS. 1 to 8. Hereinafter, only the features of the electronic device 100 that have not been described with reference to FIGS. 1 to 8 or are changed from those of FIGS. 1 to 8 will be described with reference to FIG. 9.

Referring to FIG. 9, in an electronic device 100 (e.g., the electronic device 100 of FIG. 1) according to another embodiment, a second adhesive 832 (e.g., the second adhesive 832) (e.g., a double-sided PSA) disposed between a polymer layer 411 (e.g., the polymer layer 411 of FIG. 8) and a glass layer 412 (e.g., the glass layer 412 of FIG. 8) may extend to a portion overlapping a second portion 411b (e.g., the second portion 411b in FIG. 8) of the polymer layer 411. For example, in the electronic device 100 according to another embodiment illustrated in FIG. 9, unlike the embodiment illustrated in FIG. 8, the second adhesive 832 may be disposed to overlap the second portion 411b of the polymer layer 411 as well as the first portion 411a of the polymer layer 411.

According to the illustrated embodiment, an adhesive member 880 may be disposed in a second direction (the -z direction) with respect to the second portion 411b of the polymer layer 411, and the adhesive member 880 may be attached in a second direction (the -z direction) of the second adhesive 832 in a portion overlapping the second portion 411b of the polymer layer 411. According to an embodiment, the adhesive member 880 of FIG. 9 may include embodiments that are substantially the same as or similar to the adhesive member 880 described with reference to FIG. 8, except that the adhesive member 880 of FIG. 9 is attached in the second direction (the -z direction) of the second adhesive 832. Accordingly, for a description of the adhesive member 880 illustrated in FIG. 9, the description made with reference to FIG. 8 will be used instead.

FIG. 10 is a partial cross-sectional view of an electronic device 100 illustrating in detail an edge of a flexible display 400 according to another embodiment. For example, FIG. 10 may be a cross-sectional view taken along line 7-7 of FIG. 4B, illustrating the flexible display 400 in detail.

The electronic device 100 illustrated in FIG. 10 may include embodiments that are at least partially similar to or different from the electronic devices 100 described with reference to FIGS. 1 to 9. Hereinafter, only the features of the electronic device 100 that have not been described with reference to FIGS. 1 to 9 or are changed from those of FIGS. 1 to 9 will be described with reference to FIG. 10.

Referring to FIG. 10, in the electronic device 100 (e.g., the electronic device 100 of FIG. 1) according to another embodiment, a conductive member 1010 (e.g., conductive tape) may be attached to the outer peripheral surface of the bending protection member 870 (e.g., the bending protection member 870 of FIG. 8), and the attachment of the conductive (e.g., the conductive member 820 of FIG. 8) may be omitted from the inner surface of the protection frame 810. For example, in the electronic device 100 according to another embodiment illustrated in FIG. 10, unlike the embodiment illustrated in FIG. 8, the conductive member 1010 may be attached to the outer peripheral surface of the bending protection member 870, and the conductive member (e.g., the conductive member 820 of FIG. 8) disposed to face the inner surface of the frame 810 may be omitted.

According to the illustrated embodiment, the conductive member 1010 attached to the outer peripheral surface of the bending protection member 870 may execute the function of the conductive member (e.g., the conductive member 820 of FIG. 8) attached to the inner surface of the protection frame 810 in the embodiment described with reference to FIG. 8. For example, the conductive member 1010 may execute a function of transferring (or guiding) static electricity 801 introduced from the edges of the protection frame 810 and the flexible display 400 (e.g., the first display 130 of FIG. 1) in the rear direction of the flexible display 400 (e.g., the -z direction). For example, the static electricity 801 may be transferred to the bending portion 402 of the flexible display 400 by the conductive member 1010, and the static electricity 801 transferred to the bending portion 402 of the flexible display 400 801 may be conducted to the ground of the FPCB 610 via the cover member 630.

According to an embodiment, by disposing one end of the conductive member 1010 to extend to a portion overlapping the polymer layer 411, the static electricity 801 introduced to the edge of the flexible display 400 may be transferred to the cover member 630 located on the rear surface of the flexible display 400.

According to an embodiment, the conductive member 1010 may extend to the second extension 402b of the flexible display 400. According to an embodiment, at least a portion of the conductive member 1010 disposed on the second extension 402b of the flexible display 400 may be covered by the cover member 630. According to an embodiment, the conductive member 1010 and the cover member 630 may be electrically connected to each other via a connection member 631 of the cover member 630. Accordingly, the static electricity 801 transferred to the bending portion 402 of the flexible display 400 may be transferred from the conductive member 1010 to the cover member 630.

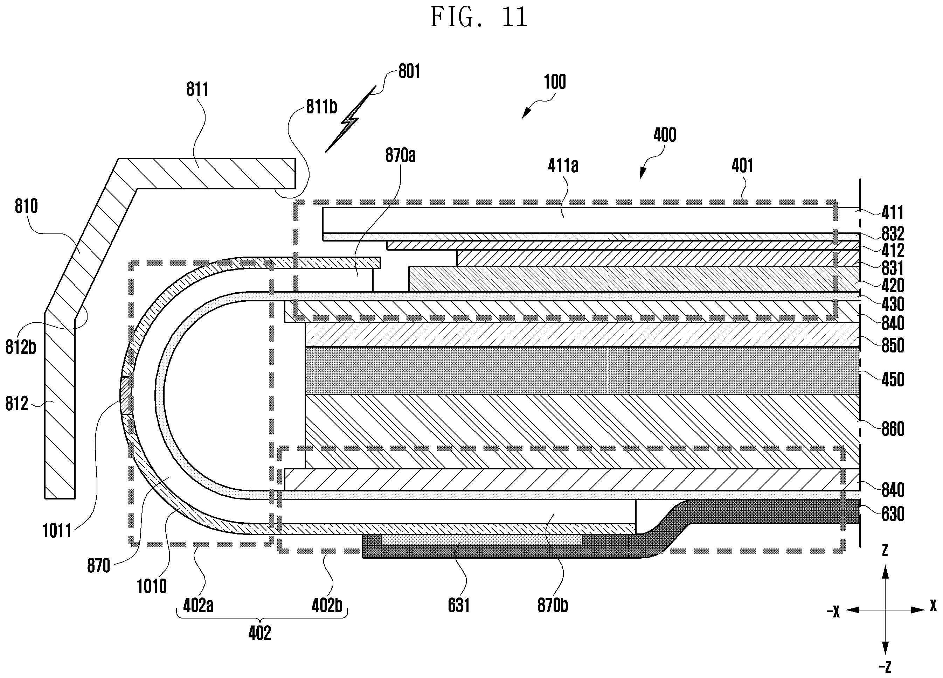

FIG. 11 is a partial cross-sectional view of an electronic device 100 illustrating in detail an edge of a flexible display 400 according to another embodiment. For example, FIG. 11 may be a cross-sectional view taken along line 7-7 of FIG. 4B, illustrating the flexible display 400 in detail.

The electronic device 100 illustrated in FIG. 11 may include embodiments that are at least partially similar to or different from the electronic devices 100 described with reference to FIGS. 1 to 10. Hereinafter, only the features of the electronic device 100 that have not been described with reference to FIGS. 1 to 10 or are changed from those of FIGS. 1 to 10 will be described with reference to FIG. 11.

Referring to FIG. 11, in the electronic device 100 (e.g., the electronic device 100 of FIG. 1) according to another embodiment, a conductive member 1010 (e.g., the conductive member 1010 of FIG. 10) (e.g., conductive tape) may be attached to the outer peripheral surface of the bending protection member 870 (e.g., the bending protection member 870 of FIG. 8) and may not extend to a portion where the polymer layer 411 overlaps the front surface frame 811 of the protection frame 810. For example, in the electronic device 100 according to another embodiment illustrated in FIG. 11, unlike the embodiment illustrated in FIG. 10, the second portion (e.g., the second portion 411b of FIG. 10) of the polymer layer 411 and the adhesive member (e.g., the adhesive member 880 of FIG. 10) may be omitted.

According to an embodiment, in the electronic device 100 illustrated in FIG. 11, by disposing one end of the conductive member 1010 attached to the outer peripheral surface of the bending protection member 870 to be adjacent to the edge of the flexible display 400 (e.g., the first display 130 of FIG. 1), the static electricity 801 introduced into the edge of the flexible display 400 may be transferred to the cover member 630 located on the rear surface of the flexible display 400.

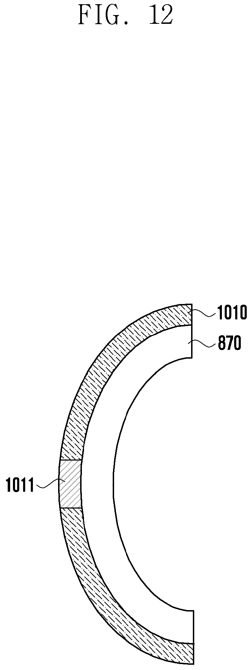

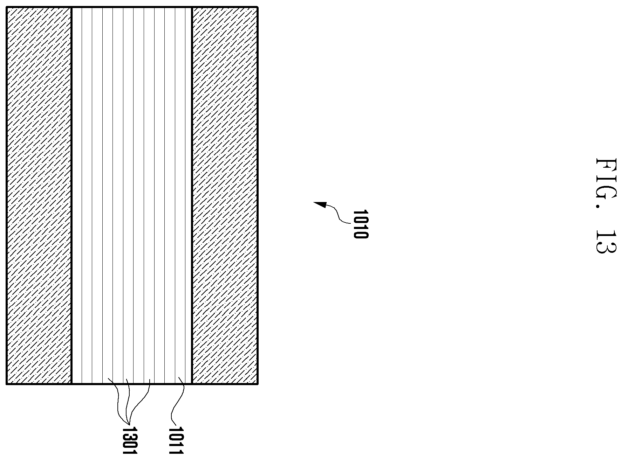

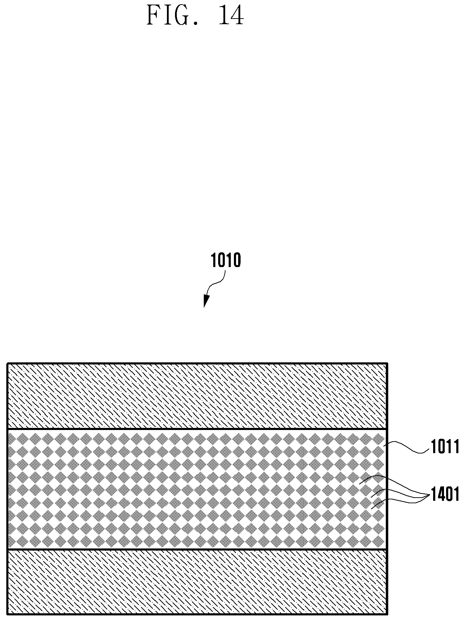

According to an embodiment, in the electronic device 100 illustrated in FIG. 11, one end of the conductive member 1010 attached to the outer peripheral surface of the bending protection member 870 may be disposed to be adjacent to the edge of the polarizer 420. For example, one end of the conductive member 1010 may overlap the polymer layer 411 and may not overlap the polarizer 420 when viewed from the z direction. FIG. 12 is a view illustrating a configuration of the bending protection member 870 according to an embodiment. FIG. 13 is a view illustrating a configuration of a pattern of the bending protection member 870 according to an embodiment. FIG. 14 is a view illustrating a configuration of a pattern of the bending protection member 870 according to another embodiment.

The bending protection member 870 and the conductive member 1010 (e.g., conductive tape) illustrated in FIGS. 12 to 14 may include embodiments that are at least partially the same as or different from the bending protection members 870 and the conductive members 1010 (e.g., conductive tape) described with reference to FIGS. 1 to 11.

Referring to FIG. 12, by attaching a conductive member 1010 (e.g., the conductive member 1010 of FIG. 10) according to an embodiment to the outer peripheral surface of the bending protection member 870, the static electricity 801 introduced into the edge of the flexible display 400 may be transferred to the cover member 630 located on the rear surface of the flexible display 400. For example, the bending protection member 870 may include a non-conductive material (e.g., an insulating material), and the conductive member 1010 may include a conductive material.

According to various embodiments, a bending pattern 1011 may be provided on at least a portion of the conductive member 1010 as illustrated in FIG. 13 or FIG. 14. According to an embodiment, the bending pattern 1011 may execute a function of reducing stress (e.g., tensile force) generated when bending a portion of the conductive member 1010 that comes into contact with the bending portion 402 of the flexible display 400.

According to an embodiment, the bending pattern 1011 provided on the conductive member 1010 may include a pattern in which a plurality of slits 1301 are spaced apart from each other, as illustrated in FIG. 13. For example, the plurality of slits 1301 may be formed by partially removing at least some layers (or at least some materials) of the conductive member 1010.

In another embodiment, the bending pattern 1011 provided on the conductive member 1010 may include a pattern in which a plurality of grid structures 1401 are arranged in a matrix form, as illustrated in FIG. 14. For example, the plurality of grid structures 1401 may be formed by partially removing at least some layers (or at least some materials) of the conductive member 1010.

## Claims

1. An electronic device (100; 300) comprising:
a first housing (110; 310);
a second housing (120; 320);
a hinge device (164; 364) disposed between the first housing and the second housing such that the second housing is foldable from one end of the first housing;
a flexible display (130; 400) disposed on the first housing and the second housing; and
a protection frame (340, 350, 550, 810) disposed to cover at least a portion of an edge of the flexible display and comprising at least one conductive member (820, 821, 822, 1010) attached to an inner surface (811b, 812b) thereof facing the flexible display,
wherein the flexible display (130, 400) comprises:
a display panel (131, 430) comprising a front surface portion (401) facing in a first direction where the flexible display is visually exposed to an outside in an unfolded state in which the first housing and the second housing are arranged side by side in a straight line, a first extension (402a) extending from one end of the front surface portion and bent in a second direction opposite to the first direction to face a lateral direction perpendicular to the first direction, and a second extension (402b) extending from the first extension and attached to a rear surface (400b, 811b) of the front surface portion to be parallel to the front surface portion;
a glass layer (412) disposed in the first direction with respect to the display panel;
a polymer layer (411) disposed in the first direction with respect to the glass layer, wherein the polymer layer comprises a first portion disposed to overlap the glass layer, and a second portion disposed outside the first portion and disposed to overlap the protection frame (340, 350, 550, 810) and the first extension;
an adhesive (P1, P2, P3, 832) disposed between the glass layer (412) and the first portion of the polymer layer; and
an adhesive member (880) attached to a rear surface (400b, 811b) of the second portion of the polymer layer and having adhesive force only in the first direction opposite to the second direction.

2. The electronic device of claim 1, wherein the flexible display (130, 400) further comprises:
a bending protection member (870, 1010) configured to cover an outer peripheral surface of the first extension (402a) of the display panel (131, 430), wherein one end of the bending protection member (870, 1010) extends to at least a portion of the front surface portion (401) to be adjacent to the glass layer (412), and another end of the bending protection member extends to at least a portion of the second extension (402b) to overlap the glass layer (412); and
a cover member (630) disposed in the second direction with respect to the second extension (402b) to cover a portion of the bending protection member and the second extension (402b) of the display panel, and electrically connected to a ground of an FPCB (610).

3. The electronic device of claim 2, wherein the FPCB (610) is electrically connected to a main circuit board of the electronic device via a connector of the FPCB, and
the ground of the FPCB is grounded via the main circuit board.

4. The electronic device of claim 1, wherein the protection frame (340, 350, 550, 810) comprises:
a front surface frame (811) disposed to overlap at least a portion of the edge of the flexible display (130, 400); and
a side surface frame (812) extending from one end of the front surface frame and disposed to face the lateral direction to face the first extension (402a) of the display panel (131, 430), and
wherein the conductive member (820, 821, 822, 1010) is attached to at least a portion of the front surface frame and the side surface frame.

5. The electronic device of claim 4, wherein the conductive member (820) comprises:
a first conductive member (821) attached in the second direction with respect to the front surface frame (811) to overlap the first extension (402a); and
a second conductive member (822) attached to an inner wall of the side surface frame (812) facing the first extension (402a).

6. The electronic device of claim 1, wherein the adhesive member (880) has a thickness greater than a thickness of the adhesive (832) disposed between the glass layer (412) and the first portion of the polymer layer (411).

7. The electronic device of claim 1, wherein the glass layer (412) comprises ultra-thin glass, UTG.

8. The electronic device of claim 1, wherein the polymer layer (411) includes polyethylene terephthalate, PET.

## Patentansprüche

1. Elektronische Vorrichtung (100; 300), die Folgendes umfasst:
ein erstes Gehäuse (110; 310);
ein zweites Gehäuse (120; 320);
eine Scharniervorrichtung (164; 364), die zwischen dem ersten Gehäuse und dem zweiten Gehäuse so angeordnet ist, dass das zweite Gehäuse von einem Ende des ersten Gehäuses aus faltbar ist;
ein flexibles Display (130; 400), das auf dem ersten Gehäuse und dem zweiten Gehäuse angeordnet ist; und
einen Schutzrahmen (340, 350, 550, 810), der so angeordnet ist, dass er mindestens einen Teil einer Kante des flexiblen Displays abdeckt und der mindestens ein leitfähiges Element (820, 821, 822, 1010) umfasst, das an einer dem flexiblen Display zugewandten Innenfläche (811b, 812b) davon angebracht ist,
wobei das flexible Display (130, 400) Folgendes umfasst:
ein Anzeigefeld (131, 430), das einen vorderen Oberflächenabschnitt (401), der in eine erste Richtung weist, in der das flexible Display in einem entfalteten Zustand, in dem das erste Gehäuse und das zweite Gehäuse nebeneinander in einer geraden Linie angeordnet sind, visuell nach außen freiliegt, eine erste Verlängerung (402a), die sich von einem Ende des vorderen Oberflächenabschnitts erstreckt und in eine zweite Richtung entgegengesetzt zu der ersten Richtung gebogen ist, um in eine seitliche Richtung senkrecht zu der ersten Richtung zu weisen, und eine zweite Verlängerung (402b) umfasst, die sich von der ersten Verlängerung erstreckt und an einer Rückseite (400b, 811b) des vorderen Oberflächenabschnitts angebracht ist, um parallel zu dem vorderen Oberflächenabschnitt zu sein;
eine Glasschicht (412), die in Bezug auf das Anzeigefeld in der ersten Richtung angeordnet ist;
eine Polymerschicht (411), die in Bezug auf die Glasschicht in der ersten Richtung angeordnet ist, wobei die Polymerschicht einen ersten Teil, der so angeordnet ist, dass er die Glasschicht überlappt, und einen zweiten Teil umfasst, der außerhalb des ersten Teils angeordnet ist und so angeordnet ist, dass er den Schutzrahmen (340, 350, 550, 810) und die erste Verlängerung überlappt;
einen Klebstoff (P1, P2, P3, 832), der zwischen der Glasschicht (412) und dem ersten Teil der Polymerschicht angeordnet ist; und
ein Klebeelement (880), das an einer Rückseite (400b, 811b) des zweiten Teils der Polymerschicht angebracht ist und nur in der ersten Richtung, die der zweiten Richtung entgegengesetzt ist, eine Klebekraft aufweist.

2. Elektronische Vorrichtung nach Anspruch 1, wobei das flexible Display (130, 400) ferner Folgendes umfasst:
ein Biegeschutzelement (870, 1010), dass konfiguriert ist, um eine äußere Umfangsfläche der ersten Verlängerung (402a) des Anzeigefelds (131, 430) abzudecken, wobei sich ein Ende des Biegeschutzelements (870, 1010) bis zu mindestens einem Teil des vorderen Oberflächenabschnitts (401) erstreckt, um an die Glasschicht (412) anzugrenzen, und sich ein anderes Ende des Biegeschutzelements bis zu mindestens einem Teil der zweiten Verlängerung (402b) erstreckt, um die Glasschicht (412) zu überlappen; und
ein Abdeckelement (630), das in Bezug auf die zweite Verlängerung (402b) in der zweiten Richtung angeordnet ist, um einen Teil des Biegeschutzelements und der zweiten Verlängerung (402b) des Anzeigefelds abzudecken, und mit einer Masse einer FPCB (610) elektrisch verbunden ist.

3. Elektronische Vorrichtung nach Anspruch 2, wobei die FPCB (610) über einen Verbinder der FPCB mit einer Hauptplatine der elektronischen Vorrichtung elektrisch verbunden ist, und
die Masse der FPCB über die Hauptplatine geerdet wird.

4. Elektronische Vorrichtung nach Anspruch 1, wobei der Schutzrahmen (340, 350, 550, 810) Folgendes umfasst:
einen Vorderflächenrahmen (811), der so angeordnet ist, dass er mindestens einen Teil der Kante des flexiblen Displays (130, 400) überlappt; und
einen Seitenflächenrahmen (812), der sich von einem Ende des Vorderflächenrahmens erstreckt und so angeordnet ist, dass er der seitlichen Richtung zugewandt ist, um der ersten Verlängerung (402a) des Anzeigefelds (131, 430) zugewandt zu sein, und
wobei das leitfähige Element (820, 821, 822, 1010) an mindestens einem Teil des Vorderflächenrahmens und des Seitenflächenrahmens angebracht ist.

5. Elektronische Vorrichtung nach Anspruch 4, wobei das leitfähige Element (820) Folgendes umfasst:
ein erstes leitfähiges Element (821), das in Bezug auf den Vorderflächenrahmen (811) in der zweiten Richtung angebracht ist, um die erste Verlängerung (402a) zu überlappen; und
ein zweites leitfähiges Element (822), das an einer Innenwand des Seitenflächenrahmens (812) angebracht ist, die der ersten Verlängerung (402a) zugewandt ist.

6. Elektronische Vorrichtung nach Anspruch 1, wobei das Klebeelement (880) eine Dicke aufweist, die größer als eine Dicke des zwischen der Glasschicht (412) und dem ersten Teil der Polymerschicht (411) angeordneten Klebstoffs (832) ist.

7. Elektronische Vorrichtung nach Anspruch 1, wobei die Glasschicht (412) ultradünnes Glas, UTG, umfasst.

8. Elektronische Vorrichtung nach Anspruch 1, wobei die Polymerschicht (411) Polyethylenterephthalat, PET, enthält.

## Revendications

1. Dispositif électronique (100 ; 300) comprenant :
un premier boîtier (110 ; 310) ;
un deuxième boîtier (120 ; 320) ;
un dispositif de charnière (164 ; 364) disposé entre le premier boîtier et le deuxième boîtier de telle sorte que le deuxième boîtier soit pliable à partir d'une extrémité du premier boîtier ;
un écran flexible (130 ; 400) disposé sur le premier boîtier et le deuxième boîtier ; et
un cadre de protection (340, 350, 550, 810) disposé pour recouvrir au moins une partie d'un bord de l'écran flexible et comprenant au moins un élément conducteur (820, 821, 822, 1010) fixé à une surface intérieure (811b, 812b) de celui-ci faisant face à l'écran flexible.
où l'écran flexible (130, 400) comprend :
un panneau d'écran (131, 430) comprenant une partie de surface avant (401) orientée dans une première direction où l'écran flexible est visuellement exposé à l'extérieur dans un état déplié dans lequel le premier boîtier et le deuxième boîtier sont disposés côte à côte en ligne droite, une première extension (402a) s'étendant d'une extrémité de la partie de surface avant et courbée dans une deuxième direction opposée à la première direction pour faire face à une direction latérale perpendiculaire à la première direction, et une deuxième extension (402b) s'étendant de la première extension et fixée à une surface arrière (400b, 811b) de la partie de surface avant pour être parallèle à la partie de surface avant ;
une couche de verre (412) disposée dans la première direction par rapport au panneau d'écran ;
une couche de polymère (411) disposée dans la première direction par rapport à la couche de verre, où la couche de polymère comprend une première partie disposée pour chevaucher la couche de verre, et une deuxième partie disposée à l'extérieur de la première partie et disposée pour chevaucher le cadre de protection (340, 350, 550, 810) et la première extension ;
un adhésif (P1, P2, P3, 832) disposé entre la couche de verre (412) et la première partie de la couche de polymère ; et
un élément adhésif (880) fixé à la surface arrière (400b, 811b) de la deuxième partie de la couche de polymère et n'ayant une force adhésive que dans la première direction opposée à la deuxième.

2. Dispositif électronique selon la revendication 1, où l'écran flexible (130, 400) comprend en outre :
un élément de protection contre la flexion (870, 1010) configuré pour recouvrir une surface périphérique extérieure de la première extension (402a) du panneau d'écran (131, 430), où une extrémité de l'élément de protection contre la flexion (870, 1010) s'étend jusqu'à au moins une partie de la partie de surface avant (401) pour être adjacente à la couche de verre (412), et une autre extrémité de l'élément de protection contre la flexion s'étend jusqu'à au moins une partie de la deuxième extension (402b) pour chevaucher la couche de verre (412) ; et
un élément de couverture (630) disposé dans la deuxième direction par rapport à la deuxième extension (402b) pour recouvrir une partie de l'élément de protection contre la flexion et de la deuxième extension (402b) du panneau d'écran, et connecté électriquement à une masse d'une FPCB (610).

3. Dispositif électronique selon la revendication 2, où la FPCB (610) est connectée électriquement à une carte de circuit imprimé principale du dispositif électronique via un connecteur de la FPCB, et
la masse de la FPCB est mise à la masse via la carte de circuit imprimé principale.

4. Dispositif électronique selon la revendication 1, où le cadre de protection (340, 350, 550, 810) comprend :
un cadre de surface avant (811) disposé pour chevaucher au moins une partie du bord de l'écran flexible (130, 400) ; et
un cadre de surface latérale (812) s'étendant d'une extrémité du cadre de surface avant et disposé pour faire face à la direction latérale pour faire face à la première extension (402a) du panneau d'écran (131, 430), et
où l'élément conducteur (820, 821, 822, 1010) est fixé à au moins une partie du cadre de surface avant et du cadre de surface latérale.

5. Dispositif électronique selon la revendication 4, où l'élément conducteur (820) comprend :
un premier élément conducteur (821) fixé dans la deuxième direction par rapport au cadre de surface avant (811) pour chevaucher la première extension (402a) ; et
un deuxième élément conducteur (822) fixé à une paroi intérieure du cadre de surface latérale (812) faisant face à la première extension (402a).

6. Dispositif électronique selon la revendication 1, où l'élément adhésif (880) a une épaisseur supérieure à l'épaisseur de l'adhésif (832) disposé entre la couche de verre (412) et la première partie de la couche de polymère (411).

7. Dispositif électronique selon la revendication 1, où la couche de verre (412) comprend du verre ultra-mince, UTG.

8. Dispositif électronique selon la revendication 1, où la couche de polymère (411) inclut du polyéthylène téréphtalate, PET.
